# EUROPÄISCHE PATENTSCHRIFT

(11) **EP 3 722 858 B1**
(45) Veröffentlichungstag und Bekanntmachung des Hinweises auf die Patenterteilung: **18.02.2026**
(21) Anmeldenummer: 20175046.0
(22) Anmeldetag: 21.07.2017
(51) Int. Cl.: G02B 7/02, F41G 1/38, G02B 23/14, G02B 23/16, F41G 1/34, G02B 27/36

(54) **FERNOPTISCHE VORRICHTUNG MIT EINEM ABSEHEN**
LONG RANGE OPTICAL DEVICE WITH A RETICLE
DISPOSITIF TÉLÉ-OPTIQUE COMPRENANT UNE PRÉVISION

(30) Priorität: 22.07.2016 AT 506742016
(43) Veröffentlichungstag der Anmeldung: 14.10.2020
(62) Teilanmeldung aus: 17182613.4
(73) Patentinhaber: Swarovski-Optik AG & Co KG., 6067 Absam (AT)
(72) Erfinder: DOHR, Mario, 6020 Innsbruck (AT); HERMANN, Herbert, 6060 Hall (AT); SALZBURGER, Thomas, 6020 Innsbruck (AT); THALER, Wilfried, 6233 Kramsach (AT); ZANGERL, Rene, 6060 Hall (AT)
(74) Vertreter: Burger, Hannes

(56) Entgegenhaltungen:
- AT-B1- 514 321
- DE-A1- 102008 003 414
- US-A1- 2006 164 857
- US-A1- 2013 162 673
- US-A1- 2013 199 074
- US-A1- 2015 345 906
- US-B2- 6 563 648

## Beschreibung

Die Erfindung betrifft eine fernoptische Vorrichtung und ein Verfahren zur Erzeugung eines überlagerten Bildes in einer fernoptischen Vorrichtung mit zumindest einem Beobachtungsstrahlengang zur Darstellung eines entfernten Gegenstands entsprechend den Oberbegriffen von Anspruch 1 und Anspruch 12.

Fernoptische Einrichtungen, wie zum Beispiel Feldstecher oder Zielfernrohre, weisen zum Teil unterschiedliche Zusatzeinrichtungen auf, bei denen auch eine Darstellung von Daten bzw. Informationen im Sehfeld des Beobachters vorgesehen ist. Dies ist beispielsweise der Fall bei Feldstechern, die mit einem Laserentfernungsmesser ausgerüstet sind. Ein durch eine Flüssigkristallanzeige erzeugtes Bild zur Darstellung des numerischen Ergebnisses der Entfernungsmessung wird dabei durch Einspiegelung über teildurchlässige Prismen in eine Zwischenbildebene des optischen Beobachtungsstrahlengangs dem Bild des beobachteten, entfernten Gegenstandes überlagert. Ein Beobachter kann somit beim Blick durch das Okular des Feldstechers neben dem Bild der beobachteten Umgebung in dem dargestellten Sehfeld gleichzeitig auch das Ergebnis der Entfernungsmessung ablesen. Andererseits weisen Zielfernrohre neben Laserentfernungsmessern aber auch weitere Zusatzeinrichtungen wie Neigungsmesser, Thermometer, Luftdruckmesser, Absehenbeleuchtungen, Ballistikrechner oder dergleichen auf. Anstelle der Verwendung klassischer Absehen mit einem fest eingravierten Fadenkreuz werden in modernen Zielfernrohren auch mehr und mehr durch ein Display erzeugte und somit veränderliche Zielmarken eingesetzt. Mit Hilfe eines Ballistikrechners kann somit auf der Basis der ermittelten Entfernung und der Messung anderer ballistisch relevanter Größen die Lage eines verstellbaren Fadenkreuzes bzw. einer Zielmarke berechnet und durch ein Display dargestellt werden. Neben der Erzeugung der Zielmarke kann das Display gleichzeitig auch zur Anzeige numerischer Werte, beispielsweise der Entfernung oder anderer Größen dienen. Insbesondere im Falle einer so erzeugten Zielmarke ist für den praktischen Einsatz deren deutliche Sichtbarkeit auch bei unterschiedlichen Umgebungslichtverhältnissen von großer Wichtigkeit. Entsprechend hoch sind die Anforderungen an die Qualität des zum Einsatz kommenden, opto-elektronischen Anzeigeelementes.

Die erforderliche Energie für den Betrieb solcher Sensoren, Anzeigeeinrichtungen und Steuerungen wird üblicherweise von einer in die Geräte integrierten Batterie zur Verfügung gestellt. Sowohl aus Platz- als auch Gewichtsgründen ist die Kapazität solcher Batterien naturgemäß begrenzt. Dennoch soll die mögliche Nutzungsdauer ausreichend lang bzw. die Anzahl der durchführbaren Messzyklen möglichst groß sein.

Der hohe Integrationsgrad unterschiedlicher optischer als auch elektronischer Komponenten stellt insbesondere für die Konstruktion von Zielfernrohren eine große Herausforderung dar. So besteht eine Konkurrenzsituation hinsichtlich des räumlichen Platzbedarf der einzelnen Komponenten einerseits als auch den zur Manipulation einzelner Komponenten erforderlichen Freiräumen innerhalb des Gehäuses der fernoptischen Vorrichtung. Dabei sollen außerdem einzelne Manipulationen wie das Scharfstellen des Bildes des entfernten Gegenstandes, die Veränderung der Vergrößerungseinstellung als auch das Einstellen der Zielmarke auf einen Auftreffpunkt eines Projektils beim Einschießen gemeinsam mit einer Waffe möglichst ohne wechselseitige Beeinflussung vorgenommen werden können.

Eine Vorrichtung der eingangs genannten Art ist beispielsweise aus der US 20150345906 A1 bekannt geworden. Weitere einschlägige Vorrichtungen sind aus der US 20130162673 A1 und der US 2013199074 A1 bekannt geworden.

Es ist daher die Aufgabe der Erfindung eine fernoptische Vorrichtung hinsichtlich der aufgezählten Anforderungen zu verbessern.

Diese Aufgabe der Erfindung wird durch eine Fernoptische Vorrichtung gemäß Anspruch 1 gelöst.

Dabei umfasst die Anzeigeeinrichtung ein Beleuchtungs-Prisma und ein Anzeigen-Prisma, wobei die Vorrichtung ein zwischen einem Objektiv und einem Okular angeordnetes Prismen-Umkehrsystem umfasst und ein Bereich des Übergangs des Anzeigen-Strahlengangs in den Beobachtungsstrahlengang an einem Prisma des Prismen-Umkehrsystems lokalisiert ist.

Zwischen dem Beleuchtungs-Prisma und der LCoS-Anzeige ist eine Wellenplatte angeordnet, die durch ein λ/4-Plättchen gebildet ist. Das hat den Vorteil einer hohen Ausbeute polarisierten Lichts, das zur Beleuchtung der LCoS-Anzeige benötigt wird. Von Vorteil ist insbesondere, dass dadurch der Kontrast des Bildes über alle seine Bereiche hinweg gleichmäßiger wird.

Von Vorteil ist außerdem, dass die LCoS-Anzeige und die Wellenplatte und die Wellenplatte und das Beleuchtungs-Prisma jeweils durch Kleben miteinander verbunden sind, da dadurch eine kompakte Baugruppe gebildet ist, deren Komponenten während der Herstellung zuverlässig und dauerhaft justiert werden können. Zusätzlich kann auch vorgesehen sein, dass das Beleuchtungs-Prisma und das Anzeigen-Prisma durch Kleben miteinander verbunden sind.

Eine vorteilhafte Weiterbildung der Vorrichtung sieht vor, dass diese einen Zoomsensor zur Erfassung eines Wertes einer eingestellten Vergrößerung umfasst.

Gemäß einer bevorzugten Ausführungsform umfasst der Zoomsensor ein Folienpotentiometer und einen mit einem Zoom-Stellring verbundenen und auf das Folienpotentiometer einwirkenden Drücker. Das Folienpotentiometer ist bezüglich des Zoom-Stellrings koaxial gekrümmt angeordnet.

Vorzugsweise umfasst die Anzeigenansteuerung, mit der die LCoS-Anzeige verbunden ist, ein Field Programmable Gate Area (FPGA). Dadurch kann der Energiebedarf für den Betrieb der Vorrichtung gering gehalten werden.

Gemäß einer bevorzugten Weiterbildung der fernoptischen Vorrichtung sind die Anzeigenansteuerung und die LCoS-Anzeige durch ein Bus-System miteinander verbunden, das ein Serial Peripheral Interface (SPI) umfasst.

Von Vorteil ist auch, wenn der Taktgenerator den die Anzeigenansteuerung aufweist, für eine Taktung mit einer Frequenz zwischen 5 MHz und 50 MHz ausgebildet ist.

Durch die Weiterbildung der fernoptischen Vorrichtung, wobei diese einen Entfernungsmesser mit einem Lasersender und einem Laserempfänger umfasst bzw. diese auch einen Neigungssensor umfasst, kann die fernoptische Vorrichtung als Zielfernrohr zum Einsatz kommen.

Durch die Weiterbildung wonach die fernoptische Vorrichtung eine Hauptsteuereinheit mit einem Ballistikrechner umfasst bzw. wobei die Hauptsteuereinheit zur Erzeugung von Bildinformationen zur Darstellung eines veränderbaren Absehens an der LCoS-Anzeige ausgebildet ist, hat den Vorteil, dass damit ein Zielfernrohr mit hoher Benutzerfreundlichkeit beim Anvisieren eines Zieles herstellbar ist.

Vorteilhaft ist auch die Weiterbildung der Vorrichtung, wonach eine Energieversorgungseinheit mit einer Batterie umfasst ist, wobei die Energieversorgungseinheit einen Kondensator aufweist und der Kondensator zu der Batterie elektrisch parallel geschalten ist. Für ein auf einer Schusswaffe montiertes Zielfernrohr kann dadurch eine erhöhte Schussfestigkeit erreicht werden. Eine Unterbrechung der Stromversorgung der Elektronik der Vorrichtung durch kurzzeitiges Abheben der Batteriekontakte von den Polen der Batterie, wie es durch die hohen Beschleunigungen bei der Abgabe eines Schusses vorkommen kann, wird dadurch verhindert.

Ein energiesparender Betrieb kann auch dann erreicht werden, wenn die Hauptsteuereinheit mit einer Einschaltlogik ausgebildet ist, wobei die Einschaltlogik zum Betätigen eines Schalters zum Aufladen des Kondensators während eines eingeschaltenen Zustands der Vorrichtung ausgebildet ist.

Von Vorteil ist auch die Weiterbildung der Vorrichtung, bei der die Hauptsteuereinheit mit einer Steuerlogik zum automatischen Abschalten nach Erreichen eines Wertes einer maximalen Einschaltdauer ausgebildet ist.

Eine Ausführungsform, bei der die Hauptsteuereinheit mit einer Steuerlogik zur Verlängerung des Wertes der Einschaltdauer ausgebildet ist, wobei ein Erreichen eines Grenzwerts einer maximalen Winkeländerung eines Wertes einer durch den Neigungssensor gemessenen Neigung ein Schaltsignal ist, hat zusätzlich noch den Vorteil einer praktischeren Handhabung eines Zielfernrohrs. Für einen Schützen ist es damit nicht mehr nötig seine Hände von der Anschlaghaltung der Schusswaffe zu entfernen, um das Abschalten der Elektronik und der Anzeige zu verzögern.

Durch die Weiterbildung der Vorrichtung, wonach eine Antenne mit der Hauptsteuereinheit verbunden ist, wird vorteilhaft erreicht, dass ein leitungsungebundener Datenaustausch beispielsweise mit einer Fernsteuerung oder einem Smartphone durchgeführt werden kann.

Die Aufgabe der Erfindung wird eigenständig auch durch ein Verfahren zur Erzeugung eines überlagernden Bildes in einer fernoptischen Vorrichtung gelöst, wobei die fernoptische Vorrichtung mit zumindest einem Beobachtungsstrahlengang zur Darstellung eines entfernten Gegenstandes und mit einer opto-elektronischen Anzeigeeinrichtung zur Darstellung von veränderbaren Daten oder einer Zielmarke ausgebildet ist und wobei ein Bild der veränderbaren Daten oder der Zielmarke durch einen Anzeigenstrahlengang der Anzeigeeinrichtung in den Beobachtungsstrahlengang projetziert wird und wobei weiters das Bild der veränderbaren Daten oder der Zielmarke durch eine LCoS-Anzeige erzeugt wird. Dabei ist der Bereich des Übergangs des Anzeigen-Strahlengangs in den Beobachtungsstrahlengang in einem Anzeigen-Prisma der Anzeigeeinrichtung lokalisiert, wobei das Anzeigen-Prisma zwischen dem Umkehrsystem und dem Okular angeordnet wird. Das Licht einer Lichtquelle zur Beleuchtung der LCoS-Anzeige wird nacheinander durch einen Polarisator, durch ein Beleuchtungs-Prisma und durch eine Wellenplatte geführt. Damit können in vorteilhafter Weise Bilder hoher Qualität in das Sehfeld des beobachteten entfernten Gegenstandes eingeblendet werden.

Eine vorteilhafte Weiterbildung des Verfahrens sieht vor, dass wenn die LCoS-Anzeige von einer Anzeigenansteuerung in zeitlicher Aufeinanderfolge von Bildschreibsequenzen mit Bildinformationsdaten angesteuert wird, zwischen zwei aufeinanderfolgenden Bildschreibsequenzen die Ansteuerung der LCoS-Anzeige für eine Dauer TP einer Pause unterbrochen wird, wobei die Dauer TP gleich oder größer ist als der Wert einer Dauer TB der Bildschreibsequenz. Dies hat den Vorteil, dass der Energiebedarf der Steuerung und Anzeige niedrig gehalten werden kann.

Eine vorteilhafte Weiterbildung des Verfahrens sieht vor, dass eine Dauer TW einer Bildperiode, entsprechend einer Summe der Dauer TB der Bildschreibsequenz und der Dauer TP der Pause, aus einem Bereich von 60 ms bis 120 ms gewählt ist.

Von Vorteil ist auch, wenn bei dem Verfahren während der Dauer TP der Pause die Ansteuerung der LCoS-Anzeige durch ein Bildfreigabesignal DE unterbrochen wird bzw. dass während der Dauer TP der Pause auch die Grundtaktung CLK eines Taktgenerators und die Anzeigenansteuerung ausgeschalten bzw. stromlos geschalten werden.

Gemäß einer bevorzugten Ausführungsform des Verfahrens ist vorgesehen, dass ein Betriebsmodus der Erzeugung des überlagerten Bildes reversibel von einem "Ruhebetrieb" in einen "Wechselbetrieb" verändert wird bzw. verändert werden kann. Dabei ist in dem Ruhebetrieb ein erster Wert einer Dauer TW 1 der Bildperiode aus einem Bereich von 60 ms bis 120 ms gewählt und in dem Wechselbetrieb ein zweiter Wert einer Dauer TW 2 der Bildperiode aus einem Bereich kleiner oder gleich 50 ms gewählt. Dadurch kann in unterschiedlichen Phasen des Betriebes der fernoptischen Vorrichtung jeweils eine ausreichend hohe Qualität der dazustellenden Bilder sichergestellt werden. Mit der kleinen Dauer TW 2 der Bildperiode im Wechselbetrieb steht eine Bildwiederholrate ausreichend hoher Frequenz zur Verfügung, dass auch relativ rasch veränderliche Bildinhalte möglichst stetig ineinander übergehend bzw. stetig veränderlich wahrgenommen werden können.

In einer bevorzugten Verfahrensweise ist vorgesehen, dass eine Veränderung des Betriebsmodus vom Ruhebetrieb in den Wechselbetrieb automatisch von einer Hauptsteuereinheit der fernoptischen Vorrichtung ausgelöst wird. Besonders bevorzugt werden von der Hauptsteuereinheit Änderungen von Betriebszuständen der fernoptischen Vorrichtung überwacht und wird beim Eintreten von vordefinierten Ereignissen die Änderung des Betriebsmodus von dem Ruhebetrieb in den Wechselbetrieb eingeleitet.

Vorteilhaft ist auch eine Verfahrensweise wonach die Änderung des Betriebsmodus von dem Ruhebetrieb in den Wechselbetrieb nach Einleitung einer Messung der Entfernung eines entfernten Gegenstandes mit einem Entfernungsmesser ausgelöst wird oder dass die Änderung des Betriebsmodus von dem ruhebetriebenen Wechselbetrieb durch Detektion einer Änderung eines Wertes eines Neigungssensors ausgelöst wird.

Von Vorteil ist insbesondere auch die Verfahrensweise, wonach die Änderung des Betriebsmodus von dem Ruhebetrieb in einen Wechselbetrieb durch eine Berechnung eines integrierten Ballistikrechners ausgelöst wird.

Gemäß einer bevorzugten Ausführungsvariante des Verfahrens ist vorgesehen, dass die Hauptsteuereinheit die Bildinformationsdaten zur Darstellung eines veränderbaren Absehens berechnet und diese an die Anzeigenansteuerung zur Ansteuerung der LCoS-Anzeige übertragen werden. Dies erlaubt eine besonders benutzerfreundliche Betriebsweise eines entsprechenden Zielfernrohrs.

Vorteilhaft sind auch Ausführungsvarianten der Verfahrensweise wobei die Änderung des Betriebsmodus von dem Ruhebetrieb in einen Wechselbetrieb durch Detektion einer Änderung eines Wertes eines Zoom-Sensors zur Feststellung der momentanen Vergrößerungseinstellung der fernoptischen Vorrichtung ausgelöst wird. In weiteren Ausführungsvarianten können auch die Detektion einer Änderung eines Wertes eines Temperatursensors oder die Detektion einer Betätigung eines Bedienelementes der fernoptischen Vorrichtung als Auslöser für eine Änderung des Betriebsmodus vorgesehen werden.

Als vorteilhaft erweisen sich auch Ausführungsvarianten wonach bei dem erfindungsgemäßen Verfahren Bildinformationsdaten zur Darstellung nur monochromatische Bilder erzeugt werden bzw. nur Bildinformationsdaten ohne Graustufendarstellung erzeugt werden. Damit werden weniger Datenleitungen zur Ansteuerung der LCoS-Anzeige benötigt, wodurch aber auch die Leistungsaufnahme für den Betrieb der Steuerung und der Anzeige der fernoptischen Vorrichtung gering gehalten werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine durch ein Zielfernrohr gebildete fernoptische Vorrichtung;
- Fig. 2: einen Längsschnitt durch das Zielfernrohr gemäß Fig. 1;
- Fig. 3: eine Detailansicht des Längsschnitts gemäß Fig. 2 mit dem Objektiv;
- Fig. 4: eine Detailansicht des Längsschnitts gemäß Fig. 2 mit dem Laserentfernungsmesser;
- Fig. 5: ein Detail des Objektivgehäuses perspektivisch dargestellt;
- Fig. 6: das Objektivgehäuse gemäß Fig. 5 mit abgenommener Abdeckung;
- Fig. 7: ein Detail der fernoptischen Vorrichtung gemäß Fig. 1 mit einer Anzeigeeinrichtung;
- Fig. 8: ein Blockschaltbild der Steuerung der fernoptischen Vorrichtung;
- Fig. 9: ein Detail der Steuerung und der Anzeigeeinrichtung gemäß Fig. 8;
- Fig. 10: ein Zeitdiagramm des Ablaufs der Ausgabe von Bildinformationsdaten;
- Fig. 11: ein Ausführungsbeispiel der Betriebsweise der Anzeigeeinrichtung der fernoptischen Vorrichtung;
- Fig. 12: ein durch ein Fernglas gebildetes Ausführungsbeispiel der fernoptischen Vorrichtung;
- Fig. 13: ein durch ein Teleskop gebildetes Ausführungsbeispiel der fernoptischen Vorrichtung in Längsrichtung geschnitten;
- Fig. 14: einen Querschnitt des Teleskops gemäß Fig. 13;
- Fig. 15: ein Detail der Anzeigeeinrichtung gemäß Fig. 7;
- Fig. 16: ein Detail einer Seitenansicht des Zielfernrohrs gemäß Fig. 1;
- Fig. 17: ein Detail der Steuerung der fernoptischen Vorrichtung gemäß Fig. 8;
- Fig. 18: ein Blockschaltbild der Steuerung der fernoptischen Vorrichtung gemäß einem weiteren Ausführungsbeispiel;
- Fig. 19: ein Detail der fernoptischen Vorrichtung gemäß den Fig. 1 bzw. 2 mit einer Fokussiereinrichtung, perspektivisch dargestellt;
- Fig. 20: ein Detail der fernoptischen Vorrichtung gemäß den Fig. 1 und 2 mit einem Teil des Mittelrohrs und dem Okulargehäuse;
- Fig. 21: die Einrichtung zur Erfassung der Vergrößerungseinstellung gemäß Fig. 16.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

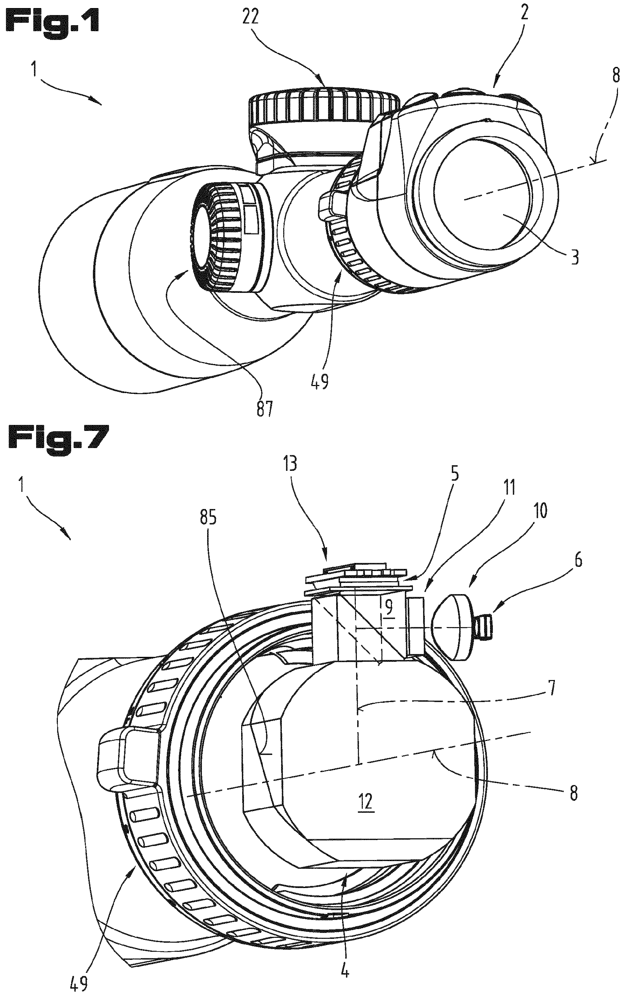

Die Fig. 1 zeigt ein Zielfernrohr als erstes Ausführungsbeispiel einer fernoptischen Vorrichtung 1 perspektivisch dargestellt. Gemäß der gewählten Betrachtungsrichtung der Darstellung erscheint im Vordergrund (rechts im Bild) ein Okulargehäuse 2 mit einem Okular 3.

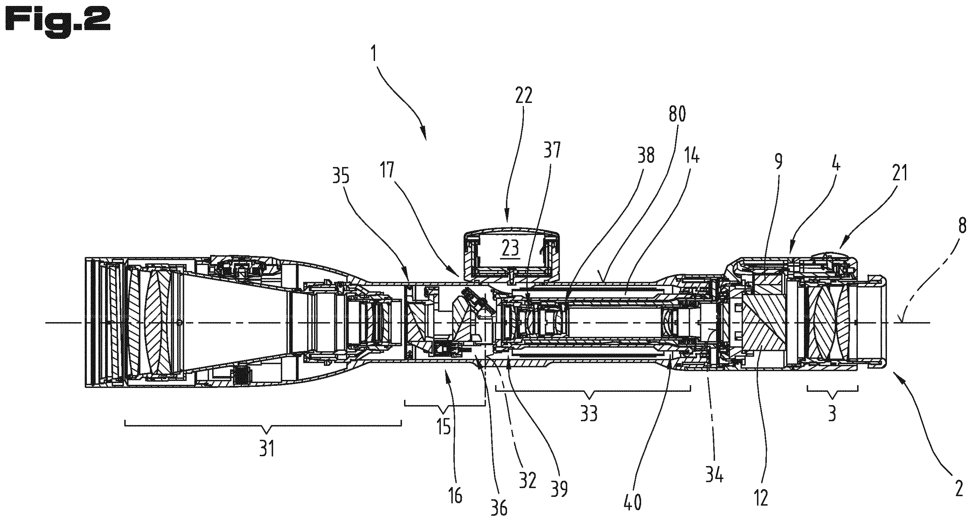

Die Fig. 2 zeigt einen Längsschnitt des Zielfernrohrs gemäß Fig. 1. Wie nachstehend noch detaillierter ausgeführt wird, sieht ein Benutzer beim Blick durch das Okular 3 die Überlagerung eines Bildes bestehend aus dem Bild eines entfernten Gegenstandes und einem von einer Anzeigeeinrichtung 4 erzeugten Bild. Das Bild bzw. die Anzeige der Anzeigeeinrichtung 4 gelangt über ein Beleuchtungsprisma 9 und ein Anzeigen-Prisma 12 in einen Beobachtungsstrahlengang 8 und dann in das Auge eines Benutzers. Dabei werden die von der Anzeigeeinrichtung 4 kommenden Lichtstrahlen an einer diagonal verlaufenden Grenzfläche 85 des als Strahlenteilerwürfel ausgebildeten Anzeigen-Prismas 12 durch Reflexion um 90° umgelenkt und so in Richtung auf das Okular 3 und in den Beobachtungsstrahlengang 8 geleitet. Andererseits wird das Bild des entfernten Gegenstandes durch ein Objektiv 31 in eine erste Zwischenbildebene 32 abgebildet. Dieses Bild der ersten Zwischenbildebene 32 wird mit Hilfe eines Linsen-Umkehrsystems 33 in eine zweite Zwischenbildebene 34 bzw. in die Bildebene des Okulars 3 abgebildet. Ein Benutzer sieht somit eine Überlagerung des Bildes des entfernten Gegenstandes und des von der Anzeigeeinrichtung 4 erzeugten Bildes.

In einer Ausführungsvariante der fernoptischen Vorrichtung ist zusätzlich auch noch im Verlauf des Strahlengangs der fernoptischen Vorrichtung 1 ein physisches Absehen angeordnet. Dieses Absehen kann beispielsweise durch ein Fadenkreuz oder eine Strichplatte gebildet sein. Vorzugsweise ist das physische Absehen in der zweiten Zwischenbildebene 34 angeordnet. Aufgrund der zusätzlichen Ausstattung mit einem physischen Absehen kann die fernoptische Vorrichtung 1 somit auch bei Ausfall der Anzeigeeinrichtung 4, beispielsweise aufgrund mangelnder Energieversorgung, für das Anvisieren eines Zieles benutzt werden.

Das Zielfernrohr bzw. die fernoptische Vorrichtung 1 umfasst einen Entfernungsmesser 15 mit einem Lasersender 16 und einem Laserempfänger 17. Von dem Lasersender 16 emittiertes Laserlicht wird auf einen entfernten Gegenstand gerichtet, von diesem reflektiert und die reflektierte Strahlung von dem Laserempfänger 17 detektiert, wobei für das Aussenden des Laserlichts durch den Lasersender 16 als auch für das Empfangen der reflektierten Laserstrahlung durch den Laserempfänger 17 der Strahlengang 8 des Objektivs 31 genutzt wird. Der Strahlengang des Lasersenders 16 als auch der Strahlengang des Laserempfängers 17 verlaufen somit zumindest teilweise in dem Beobachtungsstrahlengang 8. Um die von dem Lasersender 16 emittierte Strahlung in den Beobachtungsstrahlengang 8 in Richtung auf das Objektiv 31 einkoppeln zu können, ist ein Sender-Prismensystem 35 vorgesehen. Andererseits wird reflektierte Laserstrahlung zu dem Laserempfänger 17 mit Hilfe eines Empfänger-Prismensystem 36 aus dem Beobachtungsstrahlengang 8 ausgekoppelt. Das Sender-Prismensystem 35 und das Empfänger-Prismensystem 36 sind bevorzugt zwischen dem Objektiv 31 bzw. dem Objektivlinsensystem und dem Linsen-Umkehrsystem 33 in dem Strahlengang 8 angeordnet.

Neben der Aufrichtung und seitenrichtigen Darstellung eines in der objektivseitigen, ersten Zwischenbildebene 32 höhen- und seitenverkehrt dargestellten Bildes eines entfernten Objektes, fungiert das Linsen-Umkehrsystem 33 auch als Zoom-System, mit dem die Vergrößerung der fernoptischen Vorrichtung eingestellt bzw. verändert werden kann. Diese Einstellung der Vergrößerung wird erreicht durch eine Veränderung des Abbildungsmaßstabes mit dem das in der ersten Zwischenbildebene 32 von dem Objektiv 31 erzeugte Bild in die zweite Zwischenbildebene 34 abgebildet wird. Dazu umfasst das Linsen-Umkehrsystem 33 eine erste bewegliche Linse 37 und eine zweite bewegliche Linse 38, die in axialer Richtung verschoben werden können. Das Linsen-Umkehrsystem 33 umfasst außerdem eine Feldlinse 39 an ihrem objektivseitigen Endbereich und eine Zerstreuungslinse 40 an ihrem okularseitigen Ende, die ebenfalls an der Abbildung von der ersten Zwischenbildebene 32 in die zweite Zwischenbildebene 34 mitwirken. Mit diesem als Zoom-System wirkenden Linsen-Umkehrsystems 33 kann ein Zoomfaktor erreicht werden, dessen Wert vorzugsweise mindestens fünf beträgt.

Die Verstellung der beweglichen Linsen 37, 38 erfolgt relativ zu den feststehend angeordneten Linsen, der Feldlinse 39 und der Zerstreuungslinse 40, aber auch relativ zueinander, wobei die Verstellwege der beweglichen Linsen 37, 38 derart aufeinander abgestimmt sind, dass die Lagen der beiden Zwischenbild-Ebenen 32, 34 unverändert bleiben.

An dem Mittelrohr des Zielfernrohrs gemäß der Fig. 2 ist weiters auch eine Energieversorgungseinheit 22 mit einer Batterie 23 erkennbar. An dem Okulargehäuse 2 sind andererseits auch Bedienelemente 21 zur Eingabe von Daten bzw. Befehlen an eine Hauptsteuereinheit 14 vorgesehen.

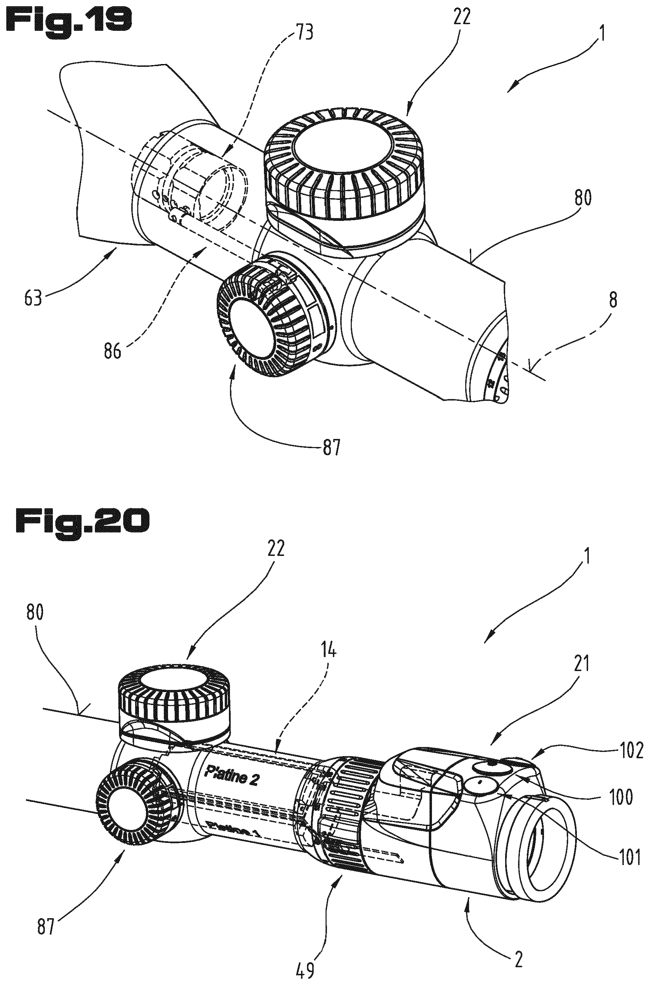

Die Hauptsteuereinheit 14 ist in einem Bereich des Linsen-Umkehrsystems 33 im Inneren eines Mittelrohrs 80 der fernoptischen Vorrichtung 1 angeordnet. Elektronische Bauteile, durch die die Hauptsteuereinheit 14 gebildet wird, befinden sich dabei in einem radialen Zwischenraum zwischen dem innenliegenden Linsen-Umkehrsystem 33 und dem inneren Umfang des röhrenförmig verlaufenden Mittelrohrs 80. Wie in Fig. 20 durch strichlierte Linien angedeutet ist, umfasst die Hauptsteuereinheit 14 mehrere Baugruppen von elektronischen Komponenten bzw. Platinen mit elektronischen Komponenten. Diese Baugruppen sind in dem Mittelrohr 80 in einer den äußeren Umfang des Linsen-Umkehrsystems 33 umschließenden Weise angeordnet. Gemäß dem Ausführungsbeispiel wie in Fig. 20 gezeigt, umfasst die Hauptsteuereinheit 14 vier solcher Platinen mit elektronischen Komponenten.

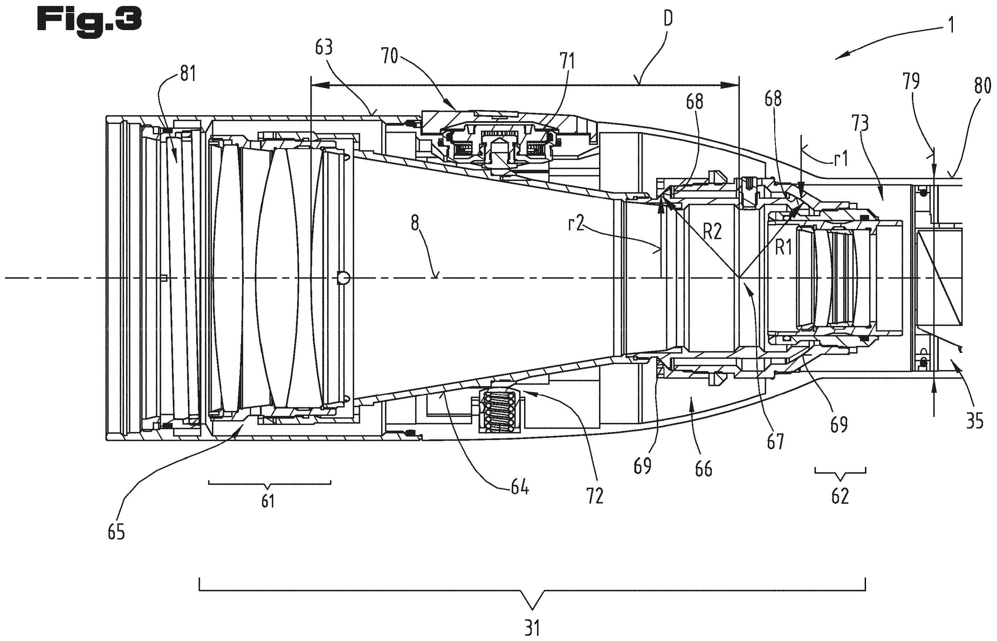

Die Fig. 3 zeigt eine Detailansicht des Längsschnitts der fernoptischen Vorrichtung 1 mit dem Objektiv 31 gemäß Fig. 2. Als strahlablenkende Elemente bzw. als abbildende Elemente enthält das Objektiv 31 ein frontales Objektiv-Linsensystem 61 und ein rückwärtiges Objektivlinsensystem 62.

Das frontale Objektiv-Linsensystem 61 als auch das rückwärtige Objektivlinsensystem 62 sind in einem Objektivgehäuse 63 angeordnet. Erfindungsgemäß ist vorgesehen, das zumindest das frontale Objektiv-Linsensystem 61 innerhalb des Objektivgehäuses 63 beweglich bzw. schwenkbar gelagert ist. Dazu ist im Inneren des Objektivgehäuses 63 ein Objektivrohr 64 angeordnet, an dem in einer Fassung 65 das frontale Objektiv-Linsensystem 61 befestigt ist. Am okularseitigen Endbereich des Objektivs 31 ist im Inneren des Objektivgehäuses 63 ein Lagergehäuse 66 befestigt. Zwischen einem okularseitigen Endbereich des Objektivrohrs 64 und dem Lagergehäuse 66 ist ein Gelenk ausgebildet. Der okularseitige Endbereich des Objektivrohrs 64 ist dabei als Gelenkkopf ausgebildet, der in dem eine Gelenkpfanne ausbildenden Lagergehäuse 66 schwenkbar gelagert ist. Das zwischen dem Lagergehäuse 66 und dem Objektivrohr 64 ausgebildete Gelenk ist vorzugsweise durch ein Kugelgelenk gebildet. Auf diese Weise ist das frontale Objektiv-Linsensystem 61 gemeinsam mit dem Objektivrohr 64 im Inneren des Objektivgehäuses 63 verschwenkbar. Das zwischen dem Lagergehäuse 66 und dem Objektivrohr 64 gebildete Gelenk weist einen auf der optischen Achse 8 befindlichen Drehpunkt 67 auf. Lagerflächen 68 in dem Lagergehäuse 66 als auch Lagerflächen 69 an dem Objektivrohr 64 sind dabei vorzugsweise als Teilflächen von Kugeloberflächen ausgebildet. Gemäß diesem Ausführungsbeispiel sind die Lagerflächen 68, 69 durch sogenannte Kugelzonen gebildet, d.h. die Teilflächen erstrecken sich zwischen zwei Begrenzungskreisen, die senkrecht bezüglich der optischen Achse 8 ausgerichtet sind.

Der okularseitige Endbereich des Objektivrohrs 64 weist einen inneren Querschnitt bzw. eine freie Öffnung auf, deren Durchmesser so groß ist, dass der Beobachtungsstrahlengang 8 möglichst ohne Querschnittsbegrenzung durch das rückwärtige Objektiv-Linsensystem 62 hindurchtreten kann. Dementsprechend sind die Lagerflächen 68 des Lagergehäuses 66 als auch die Lagerflächen 69 an dem Objektivrohr 64 mit entsprechend großen Radien bezüglich der optischen Achse 8 ausgebildet. Dabei kann ein mittlerer Radius r₁ der okularseitigen Lagerfläche 68 kleiner sein als ein mittlerer Radius r₂ der Lagerfläche 69. Indem die Lagerflächen 68, 69 durch Teilflächen von Kugeloberflächen gebildet sind, weisen diese ebenso einen Radius bezüglich des Drehpunkts 67 auf. Dabei ist es aber auch möglich, dass ein Kugelradius R₁ der okularseitigen Lagerflächen 68, 69 und ein Kugelradius R₂ der dem Okular abgewandten bzw. objektseitigen Lagerflächen 68, 69 einen voneinander unterschiedlichen Wert aufweisen.

Vorteilhaft ist es, wenn ein Verhältnis zwischen dem Radius r₂ und dem Kugelradius R₂ (der objektseitigen Lagerflächen 68, 69) kleiner ist als ein Verhältnis zwischen dem Radius r₁ und dem Kugelradius R₁ (der okularseitigen Lagerflächen 68, 69). Die durch den Rückstoß bei Abgabe eines Schusses zwischen den Lagerflächen 68, 69 auftretenden Kräfte können so besser aufgenommen bzw. verteilt werden. Gemäß diesem Ausführungsbeispiel, bei dem die Lagerflächen 68 des Lagergehäuses 66 durch Innenseiten von Kugel-Teilflächen gebildet sind und die Lagerflächen 69 an dem Objektivrohr 64 durch Außenseiten von Kugel-Teilflächen gebildet sind, treten nämlich durch den Rückstoß zwischen den objektseitigen Lagerflächen 68, 69 besonders hohe Druckbelastungen auf. Günstigerweise sind die Kugelradien R₁, R₂ größer oder zumindest gleich groß wie die Hälfte eines Durchmessers 79 eines Mittelrohrs 80 des Zielfernrohrs. Unter dem Begriff "Mittelrohr" soll im Zusammenhang mit der Beschreibung dieses Ausführungsbeispiels ein Bereich des äußeren Gehäuses der fernoptischen Vorrichtung verstanden werden, der sich zwischen dem Okulargehäuse 2 und dem Objektivgehäuse 63 erstreckt und der im Wesentlichen zylinderförmig ausgebildet ist.

Das Objektivgehäuse 63 weist schließlich auch eine Justiereinrichtung 70 zur Höhenverstellung und eine Justiereinrichtung zur Seitenverstellung (nicht dargestellt) auf. Mit Hilfe dieser Justiereinrichtungen 70 kann beim Einschießen einer Waffe gemeinsam mit dem Zielfernrohr 1 die Lage des frontalen Objektivlinsensystems 61 bzw. dessen Ausrichtung in dem Objektivgehäuse 63 eingestellt bzw. festgelegt werden. Durch eine solche Einstellung wird bei der beschriebenen fernoptischen Vorrichtung 1 die Visierlinie relativ zu der Waffe ausgerichtet, sodass das Absehen bzw. die Zielmarke mit dem Auftreffpunkt eines Projektils, mit dem die Waffe verwendet werden soll, zur Deckung gebracht wird. Die Justiereinrichtung 70 weist dazu einerseits eine Gewindespindel 71 und andererseits einen federbelasteten Druckbolzen 72 auf. Das Objektivrohr 64 ist derart zwischen der Gewindespindel 71 und dem Druckbolzen 72 liegend angeordnet, dass deren resultierende Stellkräfte quer zu der optischen Achse 8 gerichtet auf das Objektivrohr 64 einwirken. Die Justiereinrichtung 70 ist außerdem in einem Abstand von dem Drehpunkt 67 angeordnet, dessen Wert etwa gleich groß ist wie die Hälfte des maximalen Abstands des Drehpunkts 67 von dem frontalen Objektiv-Linsensystem 61. So kann durch Verstellen der Gewindespindel 71 das Objektivrohr 64 um den Drehpunkt 67 des Lagergehäuses 66 der Höhe nach geschwenkt werden. Analog dazu funktioniert auch die Seitenverstellung. Mit der Justiereinrichtung 70 zur Höhenverstellung und der Justiereinrichtung zur Seitenverstellung kann das Objektivrohr 64 mit dem frontalen Objektiv-Linsensystem 61 in einem beschränkten Raumwinkelbereich verstellt und schließlich fixiert werden. Die beiden Justiereinrichtungen, das heißt die Justiereinrichtung 70 zur Höhenverstellung und die Justiereinrichtung zur Seitenverstellung bewirken jeweils einen Verstellweg in einer Richtung quer zu der optischen Achse 8 der fernoptischen Vorrichtung 1. Die Verstellwege der Höhenverstellung einerseits und der Seitenverstellung andererseits sind etwa senkrecht zueinander ausgerichtet.

Im Übrigen erweist es sich auch als vorteilhaft, wenn eine Brennweite f des frontalen Objektiv-Linsensystems 61 größer ist als ein Abstand D des Drehpunkts 67 von dem frontalen Objektiv-Linsensystem 61. Gemäß diesem Ausführungsbeispiel hat das frontale Objektiv-Linsensystem 61 eine Brennweite f mit einem Wert von 160 mm. Der Abstand D des Drehpunkts 67 des Lagergehäuses 66 von dem frontalen Objektiv-Linsensystem 61 hat einen Wert von 87,5 mm. Vorteilhaft ist, wenn ein Verhältnis aus der Brennweite f und dem Abstand D einen Wert hat, der größer 1 ist. Noch günstiger erweist sich ein Verhältnis aus Brennweite f und Abstand D, das größer ist als 1,5. Der Drehpunkt 67 liegt somit objektseitig vor dem Brennpunkt des frontalen Objektiv-Linsensystems 61. Ein Verhältnis aus Brennweite f und Abstand D dessen Wert größer ist als 1, ist vom mechanischen Standpunkt betrachtet, insofern von Vorteil, als damit das Lagergehäuse 66 in einem Bereich des Objektivgehäuses 63 angeordnet sein kann, in dem diesem konstruktiv ein größerer Durchmesser zur Verfügung steht als der Durchmesser 79 des Mittelrohrs 80. Hinsichtlich der optischen Eigenschaften kann davon ausgegangen werden, dass das Verhältnis zwischen der Brennweite f des frontalen Objektiv-Linsensystems 61 zu dem Abstand D des Drehpunkts 67 von dem frontalen Objektiv-Linsensystems 61 annähernd gleich ist einem Verhältnis aus einer Winkeländerung der Visierlinie zu der entsprechenden mechanischen Winkeländerung der Verschwenkung des frontalen Objektiv-Linsensystems 61. Demnach bewirkt eine kleine Winkeländerung beim Verschwenken des frontalen Objektiv-Linsensystems 61 eine entsprechend größere Winkeländerung bzw. Verstellung der Richtung der Visierlinie der fernoptischen Vorrichtung 1 insgesamt.

Neben der Ausbildung einer Gelenkpfanne für das Objektivrohr 64 mit dem frontalen Objektiv-Linsensystem 61 weist das Lagergehäuse 66 außerdem in einem okularseitigen Endbereich eine Geradführung für eine Fassung 73 des rückwärtigen Objektiv-Linsensystems 62 auf. Die Fassung 73 für das rückwertige Objektiv-Linsensystem 62 ist so wie auch die diese Fassung 73 aufnehmende Geradführung im Wesentlichen zylinderförmig ausgebildet und erlaubt eine Verschiebung des rückwärtigen Objektiv-Linsensystems 62 parallel bezüglich der optischen Achse 8, d.h. parallel bezüglich der Längserstreckung der fernoptischen Vorrichtung 1. Das rückwärtige Objektiv-Linsensystem 62 kann somit zum Scharfstellen des Beobachtungsstrahlengangs 8 bzw. zum Parallaxenausgleich verwendet werden. Dazu ist ein in Fig. 3 nicht dargestellter Stellring mechanisch mit der Fassung 73 des rückwärtigen Objektivlinsensystems 62 verbunden.

Die Fig. 19 zeigt ein Detail der fernoptischen Vorrichtung 1 gemäß den Fig. 1 bzw. 2 perspektivisch dargestellt. Dabei ist der Mechanismus der Fokussiereinrichtung durch Darstellung der entsprechenden Bauteile in strichlierten Linien gezeigt. Die Fassung 73 des rückwärtigen Objektiv-Linsensystems 62 ist durch ein Gestänge 86 mit einem Stellring bzw. mit einem Parallaxeknopf 87 mechanisch verbunden.

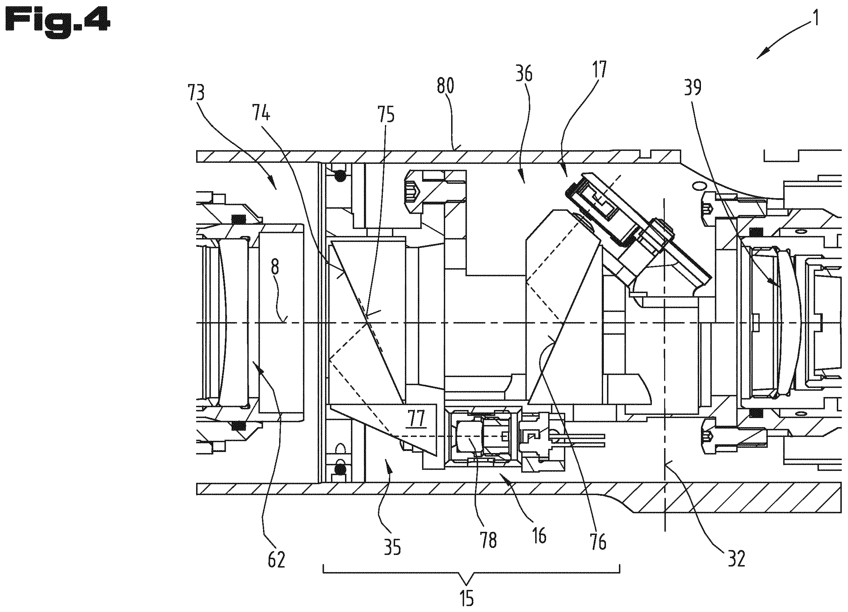

Die Fig. 4 zeigt einen Längsschnitt der fernoptischen Vorrichtung 1 als Detail der Fig. 2 mit dem Entfernungsmesser 15. Zum Einkoppeln des von dem Lasersender 16 emittierten Lichtes in den Beobachtungsstrahlengang 8 ist an einer inneren Grenzfläche 74 des Sender-Prismensystems 35 ein Bereich 75 mit einer dichroiden Beschichtung vorgesehen. An dieser dichroiden Beschichtung wird selektiv Licht nur jener Wellenlänge, wie sie dem Licht des Lasersenders 16 entspricht, reflektiert. Dieser dichroid beschichtete Bereich 75 ist in etwa kreisförmig ausgebildet. Das auf einen entfernten Gegenstand ausgesendete Laserlicht des Lasersenders 16 ist dementsprechend auf einen begrenzten Raumwinkelbereich beschränkt.

Das Auskoppeln von Laserlicht, das von dem entfernten Gegenstand zurückgeworfenen wurde, hin zu dem Laserempfänger 17 erfolgt an einer Grenzfläche 76 des Empfänger-Prismensystems 36. Diese Grenzfläche 76 ist ebenfalls mit einer dichroiden Beschichtung ausgebildet. Zum Passieren des Sender-Prismensystems 35 steht dem von dem entfernten Gegenstand zurückgeworfenen Laserlicht der an der Grenzfläche 74 des Sender-Prismensystems 35 nicht beschichtete, d.h. der den Bereich 75 umgebende Bereich, zur Verfügung.

Wie vorstehend anhand der Figurenbeschreibung der Fig. 3 bereits ausgeführt, ist das Objektiv 31 bzw. dessen frontales Objektiv-Linsensystem 61 in dem Objektivgehäuse 63 schwenkbar gelagert. Um den Innenraum der fernoptischen Vorrichtung bzw. des Gehäuses 63 gasdicht verschließen zu können, ist die objektseitige Öffnung der fernoptischen Vorrichtung 1 mit einem Deckglas 81 versehen. Das Deckglas 81 weist vorteilhafterweise relativ zu der Längserstreckung der fernoptischen Vorrichtung 1 bzw. relativ zur optischen Achse 8 eine schräge Stellung auf. Das heißt eine Flächennormale auf eine der planparallelen Flächen des Deckglases 81 ist relativ zu der optischen Achse 8 geneigt. Bevorzugt wird von der Flächennormalen des Deckglases 81 ein Winkel mit einem Wert zwischen 0,5° und 2° eingeschlossen. Auf diese Weise können Störungen der Detektion von Laserstrahlung an dem Laserempfänger 17 durch von dem Deckglas 81 zurückgeworfene Strahlungsanteile des von dem Lasersender 16 ausgesendeten primären Laserstrahls möglichst gering gehalten werden.

Als Lasersender 16 ist eine Laserdiode vorgesehen. Die Wellenlänge des Lasersenders wird vorzugsweise aus dem Infrarotbereich, insbesondere mit einer Wellenlänge von 905 nm gewählt. Zur Einleitung des Laserlichts des Lasersenders 16 in das Sender-Prismensystem 35 ist an diesem ein Umlenkprisma 77 angeordnet, wobei zwischen dem Lasersender 16 und dem Umlenkprisma 77 bzw. dem Lasersender 16 und dem Sender-Prismensystem 35 eine Sender-Linse 78 vorgesehen ist. Diese Sender-Linse 78 wird durch eine Sammellinse gebildet, wodurch vorteilhafterweise die Baulänge der Anordnung des Lasersenders 16 gemeinsam mit dem Sender-Prismensystem 35 entsprechend verkürzt werden kann.

Sowohl für die Lage des Lasersenders 16 bzw. der entsprechenden Laserdiode als auch für die Lage des Laserempfängers 17 ist vorgesehen, dass sich diese virtuell in der ersten Zwischenbildebene 32 befinden. Dadurch wird erreicht, dass sowohl der Beobachtungsstrahlengang 8 als auch die Strahlengänge des Lasersenders 16 und des Laserempfängers 17 durch Verstellen des rückwärtigen Objektivlinsensystems 62 gemeinsam scharf gestellt werden können.

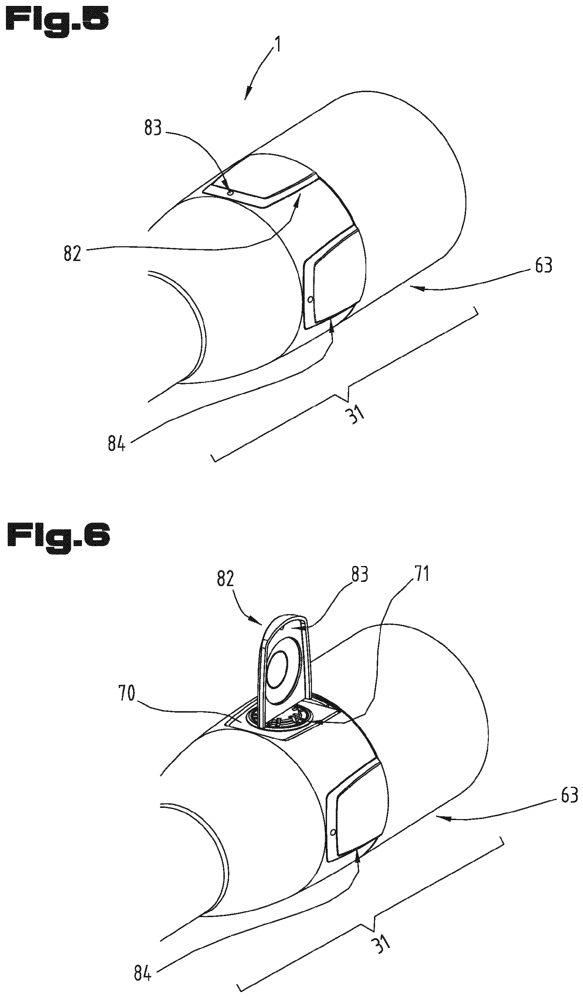

Anhand der Fig. 5 und 6 wird nachfolgend das Ausrichten bzw. Justieren des Objektivrohrs 64 mit dem frontalen Objektiv-Linsensystem 61 des Objektivs 31 beschrieben. Dabei zeigen die Figuren jeweils eine perspektivische Außenansicht des Objektivgehäuses 63 der fernoptischen Vorrichtung 1 bzw. des Zielfernrohrs gemäß Fig. 2. Wie vorstehend anhand der Fig. 3 bereits ausgeführt worden ist, erfolgt die Einstellung und Justierung des Objektivrohrs 64 mit dem frontalen Objektiv-Linsensystem 61 im Inneren des Objektivgehäuses 63 mit Hilfe der Justiereinrichtung 70 der Höhe nach. Dieses Verstellen bzw. Verschwenken des Objektivrohrs 64 kann durch einen Benutzer dadurch bewirkt werden, dass die Gewindespindel 71 manuell entsprechend gedreht wird. Gemäß diesem Ausführungsbeispiel ist vorgesehen, dass die Gewindespindel 71 unterhalb der äußeren Kontur des Objektivgehäuses 63 versenkt angeordnet ist. Zusätzlich ist - wie in Fig. 5 dargestellt - die Gewindespindel 61 bzw. der Zugang zu der Gewindespindel 61 mit einer Abdeckung 82 verschlossen, sodass die äußere Kontur des Objektivgehäuses 63 gleichförmig durch die Abdeckung 82 ergänzt scheint. Die Abdeckung 82 ist außerdem so ausgebildet, dass sie - wie in Fig. 6 dargestellt - als Werkzeug zum Betätigen der Gewindespindel 71 verwendet werden kann. Die Abdeckung 82 umfasst außerdem eine Verriegelung 83 mit deren Hilfe die Abdeckung 82 fest an dem Objektivgehäuse 63 fixiert werden kann. In analoger Weise wie für die Justiereinrichtung 70 zur Höhenverstellung bzw. deren Gewindespindel 71 ist auch für die Justiereinrichtung zur Seitenverstellung eine Abdeckung 84 vorgesehen.

Die Fig. 7 zeigt ein Detail der fernoptischen Vorrichtung 1 gemäß Fig. 1 teilweise demontiert. Dabei sind von dem okularseitigen Ende der fernoptischen Vorrichtung 1 das Okulargehäuse 2 als auch das Okular 3 entfernt und ist somit eine Anzeigeeinrichtung 4 sichtbar. Diese Anzeigeeinrichtung 4 umfasst als deren primäre Komponenten eine LCoS-Anzeige 5 (LCoS = Liquid Cristal on Silicon) und eine Lichtquelle 6 zur Beleuchtung der LCoS-Anzeige 5. Ein an der LCoS-Anzeige 5 erzeugtes Bild wird über einen Anzeigen-Strahlengang 7 in einen Beobachtungs-Strahlengang 8 der fernoptischen Einrichtung 1 überführt und kann von einem Beobachter durch das Okular 3 hindurch betrachtet werden.

Zur Beleuchtung der LCoS-Anzeige 5 durch die Lichtquelle 6 wird deren Licht durch ein Beleuchtungs-Prisma 9 auf die LCoS-Anzeige 5 hin reflektiert, wobei es zunächst durch eine Beleuchtungs-Linse 10 fokussiert und durch einen Polarisator 11 polarisiert wird. Von der LCoS-Anzeige 5 wiederum reflektiertes Licht gelangt durch das Beleuchtungs-Prisma 9 hindurch in ein Anzeigenprisma 12, durch das es mit dem Licht des Beobachtungsstrahlengangs 8 zusammengeführt und zu dem Okular 3 hin reflektiert wird. Sowohl das Beleuchtungs-Prisma 9 als auch das Anzeigenprisma 12 sind nach der Art eines Strahlenteilerwürfels aufgebaut. Das Beleuchtungs-Prisma 9 und das Anzeigenprisma 12 sind jeweils polarisierend bzw. haben auf das durchtretende Licht eine polarisierende Wirkung. Das Licht der Lichtquelle 6 wird somit durch den Polarisator 11 geführt und nach Umlenkung durch das Beleuchtungs-Prisma 9 auf die LCoS-Anzeige 5 gelenkt, wo Flüssigkristallmoleküle per elektrischer Spannung so ausgerichtet werden, dass das Licht in der gewünschten Helligkeit reflektiert wird. Die zur Erzeugung eines Bildes auf der LCoS-Anzeige 5 erforderliche Ausrichtung der Flüssigkristallmoleküle wird durch eine Anzeigen-Ansteuerung 13 bewirkt.

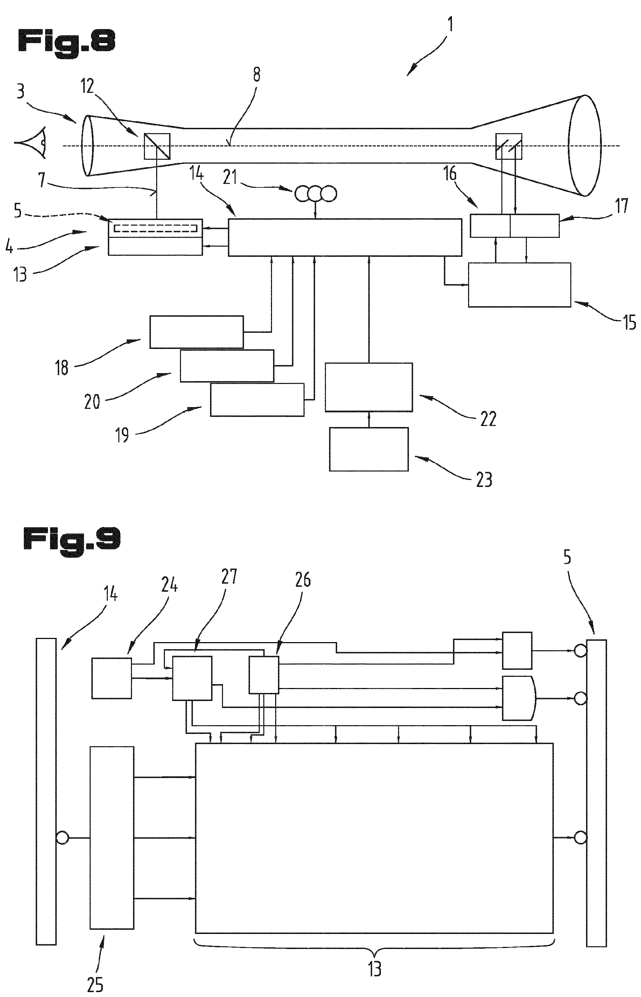

Die Fig. 8 zeigt ein Blockschaltbild der Steuerung der fernoptischen Vorrichtung 1. Die als Teleskop ausgebildete fernoptische Vorrichtung 1 gemäß diesem Ausführungsbeispiel umfasst neben der Anzeigeeinrichtung 4 eine Hauptsteuereinheit 14 und als weitere Zusatzeinrichtungen einen Entfernungsmesser 15 mit einem Lasersender 16 und einem Laserempfänger 17 als auch einen Neigungssensor 18, einen Temperatursensor 19 und einen Zoomsensor 20 zur Messung der momentanen Vergrößerungseinstellung des Teleskops. Zur Beeinflussung der Betriebsweise der Steuerung der fernoptischen Vorrichtung 1 sind außerdem Bedienelemente 21 vorgesehen. Eine Energieversorgungseinheit 22 wird gemäß diesem Ausführungsbeispiel vorzugsweise durch eine Batterie 23 gespeist.

Die Fig. 9 zeigt ein Detail gemäß Fig. 8 zur Veranschaulichung der Erzeugung eines Bildes auf der Anzeigeeinrichtung 4 mit der Hauptsteuereinheit 14, der Anzeigenansteuerung 13 und der LCoS-Anzeige 5. Der zeitliche Verlauf bzw. die zeitliche Abfolge der Ansteuerung einzelner Pixel an der LCoS-Anzeige 5 wird durch einen Taktgenerator 24 bestimmt. Zur Übertragung von auf der LCoS-Anzeige 5 darzustellenden Bildern werden deren Bildinformationsdaten von der Hauptsteuereinheit 14 mittels einem Bus-System 25 übertragen. Das Bus-System 25 ist vorzugsweise durch ein sogenanntes Serial Peripheral Interface (SPI) ausgebildet. Die Aufbereitung der Bildinformationsdaten zur Erzeugung einzelner Bildpunkte auf der LCoS-Anzeige 5 erfolgt in der Anzeigenansteuerung 13. Vorzugsweise werden bei jeder ansteigenden und jeder abfallenden Flanke des Taktgenerators 24 jeweils gleichzeitig vier Bildpunkte der LCoS-Anzeige 5 angesteuert.

Die Anzeigenansteuerung 13 wird vorzugsweise durch einen integrierten Schaltkreis in der Form eines sogenannten Field Programmable Gate Area (FPGA) gebildet. Die Bildinformationsdaten eines darzustellenden Bildes werden von der Anzeigensteuerung 13 über das Bus-System 25 eingelesen und derart strukturiert bzw. umgereiht, dass die Bildpunkte auf der LCoS-Anzeige 5 seriell, Zeile für Zeile ausgegeben werden können. Dazu wirkt mit der Anzeigensteuerung 13 neben dem Taktgenerator 24 auch ein Spaltenzähler 26 und ein Zeilenzähler 27 zusammen.

Ohne Einschränkung der Allgemeinheit soll in weiterer Folge davon ausgegangen werden, dass die LCoS-Anzeige 5 eine Anzahl von Bildpunkten von 600 Zeilen zu je 800 Bildpunkten bzw. Spalten aufweist. Durch die Taktung der Anzeigenansteuerung 13 mit dem Taktgenerator 24 bzw. dem Spaltenzähler 26 und dem Zeilenzähler 27 wird erreicht, dass die Bildpunkte bzw. Pixel der LCoS-Anzeige 5 jeweils mit den entsprechenden Bildinformationen eines darzustellenden Bildes angesteuert werden. Dabei sorgt der Spaltenzähler 26 dafür, dass durch Erhöhung des Werts des Zählers aufeinanderfolgende Bildpunkte der LCoS-Anzeige 5 innerhalb einer Zeile aufeinanderfolgend mit Bildinformationsdaten angesteuert werden. Sobald der Spaltenzähler 26 die maximal mögliche Anzahl von Bildpunkten je Zeile - in diesem Ausführungsbeispiel 800 Bildpunkte - erreicht hat, wird der Stand des Zeilenzählers 27 inkrementiert und der Spaltenzähler 26 auf Null zurückgesetzt und kann sodann die Ausgabe einer weiteren Zeile von Bildinformationsdaten erfolgen. Wenn schließlich auch der Zeilenzähler 27 seine maximal mögliche Anzahl von Zeilen - in diesem Ausführungsbeispiel 600 - erreicht hat, wird auch der Zeilenzähler 27 auf Null zurückgesetzt und kann die Ausgabe mit einer neuen Bildschreibsequenz fortgesetzt werden.

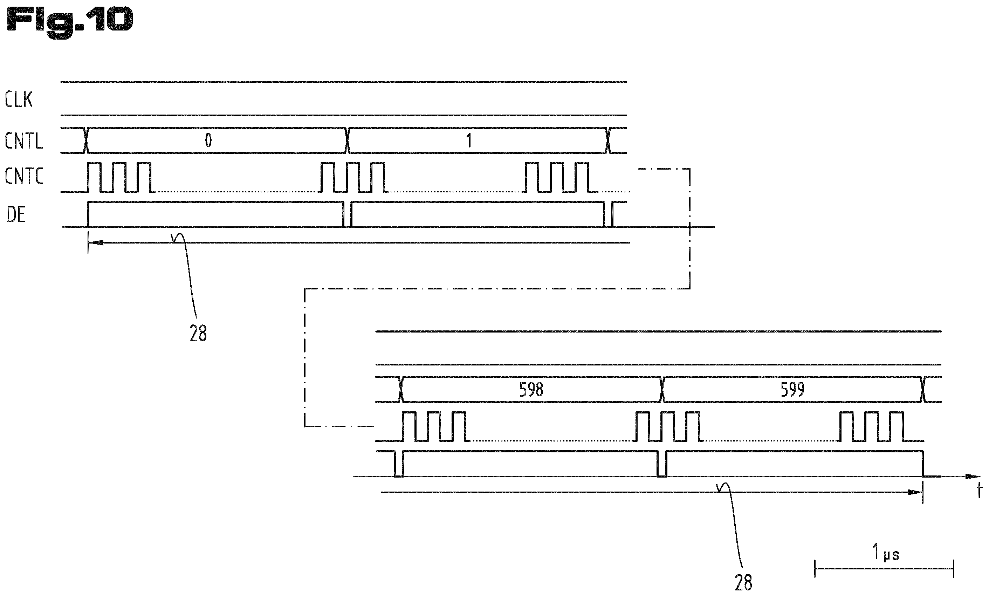

Die Fig. 10 zeigt ein Zeitdiagramm zur Veranschaulichung der Ausgabe von Bildinformationsdaten bzw. der Ansteuerung der LCoS-Anzeige 5 zur Erzeugung eines einzigen vollständigen Bildes. Die in der Fig. 10 angegebenen Abkürzungen repräsentieren dabei Steuersignale bzw. Taktsignale mit denen die Bilderzeugung an der LCoS-Anzeige 5 gesteuert wird. "CLK" ist dabei die Grundtaktung wie sie von dem Taktgenerator 24 (Fig. 9) vorgegeben wird. "CNTL" bezeichnet die Nummer der Zeile der LCoS-Anzeige 5 in die zu dem entsprechenden Moment eine Ausgabe von Bildinformationsdaten erfolgt. "CNTC" repräsentiert die Spalten innerhalb einer Zeile von Bildpunkten. Die Abkürzung "DE" bezeichnet das Bildfreigabesignal, durch das die Ausgabe von an Ausgaberegistern der Anzeigen-Ansteuerung 13 anstehenden Bildinformationsdaten freigegeben oder gesperrt werden kann. Entsprechend den Zeilennummern "CNTL" von 0 bis 599 ist in Fig. 10 eine Bildschreibsequenz 28 eines einzigen kompletten Bildes mit 600 Zeilen zu je 800 Punkten (Spalten; CNTC) dargestellt.

Kommerzielle bzw. marktübliche LCoS-Anzeigen 5 haben eine Grundtaktung des Taktgenerators 24 von typischerweise 41 MHz und eine Bildwechselfrequenz von 480 Hz. In üblichen Anwendungen von LCoS-Anzeigen 5 in Videoprojektoren sind zur Vermeidung von Flackern und Ruckeln relativ hohe Bildwiederholfrequenzen erwünscht. Dabei kommen auch spezielle Abfolgen von sequenziellen Farbbildern, beispielsweise von 8 aufeinander folgenden Bildern unterschiedlicher Farben zur Anwendung, sodass sich eine Bildwiederholfrequenz für ein komplettes Farbbild von 60 Hz ergibt. Eine solche Bilderfolge ist z.B. die Folge "RRG-GBBGG" mit R = Rot, G = Grün und B = Blau. Die Bildschreibsequenz 28 für ein einzelnes Bild einer einzigen Farbe hat somit eine Dauer TB von ca. 2 ms. Zur Wiedergabe eines Films mit einem Videoprojektor erfolgt die Ausgabe von Bildinformationsdaten an die LCoS-Anzeige 5 durch zeitlich unmittelbar aufeinanderfolgende Bildschreibsequenzen 28.

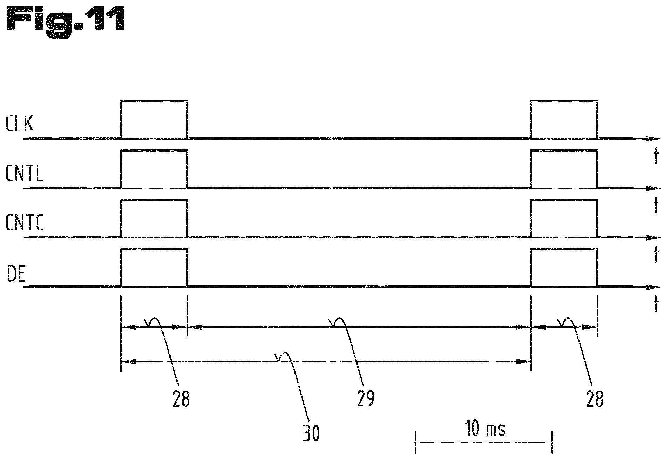

Gemäß einer ersten Ausführungsform einer erfindungsgemäßen fernoptischen Vorrichtung 1 ist vorgesehen, dass die Ausgabe von Bildinformationsdaten an die LCoS-Anzeige 5 zumindest für eine Dauer TP einer Pause 29 unterbrochen wird. Die Fig. 11 zeigt ein erstes Beispiel einer solchen Betriebsweise der Ansteuerung der LCoS-Anzeige 5, wiederum veranschaulicht durch ein Zeitdiagram der schon erwähnten Steuersignale. Die Länge bzw. Dauer TP der Pause 29 ist größer oder zumindest gleich groß wie die Dauer TB einer Bildschreibsequenz 28. Die Ansteuerung der Bildpunkte der LCoS-Anzeige 5 erfolgt somit mit einer Aufeinanderfolge von Bildperioden 30 einer Länge TW. Die Dauer TW der Bildperiode 30 ist somit größer oder zumindest gleich dem doppelten Wert der Länge TB der Bildschreibsequenz 28. Diese Betriebsweise kann dadurch erreicht werden, dass für die Dauer TP der Pause 29 zumindest das Bildfreigabesignal DE auf Null gesetzt wird. Dadurch wird vorteilhafterweise erreicht, dass der Energieverbrauch der Anzeigeeinrichtung 4 gering gehalten werden kann.

Gemäß bevorzugter Ausführungsvarianten der Betriebsweise der fernoptischen Vorrichtung 1 werden für die Dauer TP der Pause 29 aber auch noch weitere Komponenten der Anzeigeeinrichtung 4, wie der Spaltenzähler 26, der Zeilenzähler 27 aber auch der Taktgenerator 24 stromlos geschaltet.

Gemäß einer weiteren vorteilhaften Ausführungsvariante wird die LCoS-Anzeige 5 durch die Anzeigenansteuerung 13 zur monochromatischen Anzeige von Bildinhalten betrieben. Dadurch kann die Dauer TB der Bildschreibsequenz 28 entsprechend kurz gehalten werden.

Gemäß einer besonders bevorzugten Betriebsweise der Anzeigenansteuerung 13 und der LCoS-Anzeige 5 ist vorgesehen die Dauer TW der Bildperiode 30 aus einem Bereich von 60 ms bis 120 ms zu wählen.

Demnach sind für die Dauer TP der Pause 29 sowohl die Steuersignale CNTL und CNTC des Zeilenzählers 27 bzw. des Spaltenzählers 26 (Fig. 10) als auch die Grundtaktung CLK des Taktgenerators 24 ausgeschalten. Es hat sich gezeigt, dass selbst bei relativ großem Wert der Dauer TW der Bildperiode 30 von bis zu 120 ms noch kein Verblassen der Anzeige von Bildern an der LCoS-Anzeige 5 oder ein Flackern der Anzeige wahrgenommen werden kann. Dies trifft speziell für die Darstellung von statischen Bildinformationen zu. Solche können zum Beispiel sein, die Anzeige des Wertes der von dem Temperatursensor 19 gemessenen Temperatur oder des Wertes der von dem Entfernungsmesser 15 gemessenen Entfernung eines Objektes nach erfolgter Messung und Auswertung auf der LCoS-Anzeige 5. Die Darstellung entsprechend den Ziffern und Zeichen auf der LCoS-Anzeige 5 bzw. das dargestellte Bild weist dabei praktisch keine nennenswert rasche Veränderung auf. Selbst bei einer Anzeige des Wertes der Neigung einer Waffe die von dem Neigungssensor 18 gemessen wird, wird ein relativ großer Wert TW der Bildperiode 30 von einem Benutzer nicht als irgendwie störend wahrgenommen.

Gemäß einem bevorzugten Verfahren der Betriebsweise der Steuerung der fernoptischen Vorrichtung 1 ist vorgesehen, die Dauer TW der Bildperiode 30 zur Ansteuerung der LCoS-Anzeige 5 dynamisch in Abhängigkeit von Betriebszuständen bei der Benutzung der fernoptischen Vorrichtung 1 anzupassen. Dazu sind für die Steuerung der Anzeigeneinrichtung 4 ein "Ruhebetrieb" oder "Persistenzbetrieb" einerseits und ein "Wechselbetrieb" oder "Transienzbetrieb" andererseits vorgesehen. Im Ruhebetrieb in dem nur ein statisches Bild bzw. entsprechende Bildinformationen durch die Anzeigeinrichtung 4 auf der LCoS-Anzeige 5 dargestellt werden müssen, ist eine erste Dauer TW 1 der Bildperiode 30 aus einem Bereich von 60 ms bis 120 ms für die Ansteuerung der LCoS-Anzeige 5 vorgesehen. Treten Änderungen in den Betriebszuständen der fernoptischen Vorrichtung 1 ein, die eine Änderung der darzustellenden Bildinformation bewirken können, so wird die Betriebsweise der Anzeigeeinrichtung 4 temporär in den Wechselbetrieb überführt, indem die Dauer TW der Bildperiode 30 auf einen zweiten Wert TW 2 von kleiner als 50 ms reduziert wird. Für die Dauer einer vorgebbaren Latenzzeit in der mit einer Veränderung der Bildinformationsdaten, die schließlich an der LCoS-Anzeige 5 dargestellt werden müssen, zu rechnen ist, verbleibt die Betriebsweise der Anzeigeeinrichtung 4 in diesem Wechselbetrieb. Dementsprechend folgt die Darstellung der Bildinformationsdaten an der LCoS-Anzeige 5 mit einer deutlich höheren Frequenz, nämlich mit einer Frequenz von 20 Hz oder mehr als 20 Hz. Damit können Bilder auch in Phasen einer raschen Veränderung von Bildinformationsdaten durch den Beobachter trotzdem als weitgehend stetig veränderlich wahrgenommen werden. Ein Flackern oder Ruckeln von Bildern kann so noch besser vermieden werden.

Ein solcher Übergang der Betriebsweise der fernoptischen Einrichtung von einem Ruhebetrieb in den Wechselbetrieb kann durch verschiedene Ereignisse, die von der Hauptsteuereinheit 14 registriert werden können, ausgelöst werden. So wird beispielsweise durch das Betätigen der Bedienelemente 21 zum Auslösen eines Messvorgangs mit dem Entfernungsmesser 15 ein solcher Übergang in den Wechselbetrieb der Anzeigeeinrichtung 4 eingeleitet. Für die erforderliche Zeitdauer, die für die Durchführung der Messung, die Auswertung der Messung und die Ausgabe des ermittelten Wertes der gemessenen Entfernung an der LCoS-Anzeige 5 benötigt wird, verbleibt die Anzeigeeinrichtung 4 in dem Wechselbetrieb mit der Dauer TW 2 der Bildperiode 30 von gleich oder kleiner 50 ms. Sobald die Messung der Entfernung und deren Anzeige abgeschlossen ist und von der Hauptsteuereinheit 14 der fernoptischen Vorrichtung keine weitere Änderung registriert wird, wird die Anzeigeeinrichtung 4 von dem Wechselbetrieb wieder in den Ruhebetrieb zurückgeführt. Das heißt die Dauer der Bildperiode 30 wird wieder auf TW 1 (von z.B. 100 ms) erhöht.

Analog zu der Änderung der Betriebsweise der Anzeigeneinrichtung 4 vom Ruhebetrieb in den Wechselbetrieb und wieder zurück in den Ruhebetrieb, wie sie durch eine Einleitung einer Entfernungsmessung durch eine Betätigung des Bedienungselementes 21 initiiert werden kann, ist in einer Weiterbildung der fernoptischen Einrichtung auch vorgesehen, dass durch die Hauptsteuereinheit 14 andere Ereignisse als Auslöser wirken können. Dazu kann beispielsweise vorgesehen sein, dass in der Hauptsteuereinheit 14 eine Überwachung des Zoom-Sensors 20, des Neigungssensors 18, des Temperatursensors 19 oder auch anderer möglicherweise vorgesehener Messeinrichtungen der fernoptischen Vorrichtung auf das Eintreten von Werteänderungen entsprechender Messgrößen überwacht werden. Nach Feststellen eines solchen Ereignisses durch die Hauptsteuereinheit 14, das eine neue Bestimmung der dazustellenden Bildinformationsdaten an der LCoS-Anzeige 5 notwendig macht, wird die Betriebsweise der Anzeigeeinrichtung 4 von dem Ruhebetrieb in den Wechselbetrieb mit der entsprechend höheren Bildwiederholfrequenz bzw. Bildwiederholrate übergeführt und nach einer vorwählbaren Latenzzeit der Betriebszustand der Anzeigeeinrichtung 4 wieder von dem Wechselbetrieb in den Ruhebetrieb zurück gesetzt.

Eine solche Neubestimmung der darzustellenden Bildinformationsdaten mit einem temporären Wechsel der Betriebsweise der Anzeigeeinrichtung 4 zwischen dem Ruhebetrieb und dem Wechselbetrieb ist insbesondere dann von Vorteil, wenn zumindest auf der Basis der von dem Entfernungsmesser 15 gemessenen Entfernung und der von dem Neigungssensor 18 gemessenen Neigung der Schusswaffe eine Neuberechnung der zur Darstellung eines Fadenkreuzes bzw. eines Absehens erforderlichen Bildinformationsdaten erfolgt. Dies ist der Fall, wenn die fernoptische Vorrichtung 1 bzw. deren Hauptsteuereinheit 14 über einen integrierten Ballistikrechner verfügt. Kommt es im Zusammenhang mit den Bewegungen der Schusswaffe beim Anvisieren eines Zieles zu einer Änderung der mit dem Neigungssensor 18 gemessenen Neigung, so wird damit auch fortlaufend eine Neuberechnung der anzuzeigenden Bildinformation zur Darstellung des veränderlichen Fadenkreuzes erfolgen. Für den Benutzer der fernoptischen Vorrichtung 1 ist es in so einem Fall besonders wünschenswert, die Verschiebung des Fadenkreuzes als möglichst kontinuierlich und stetig veränderlich wahrzunehmen. Dies wird durch die höhere Bildwiederholfrequenz bzw. die kürzere Bildperiode 30 (TW 2) für die Darstellung entsprechender Bilder an der LCoS-Anzeige 5 erreicht.

Neben der schon erwähnten Möglichkeit für die Betriebsweise der Anzeigeeinrichtung 4 eine ausschließlich monochromatische Darstellung vorzusehen, ist es außerdem von Vorteil auf die Darstellung von Grauwerten bei der Erzeugung der Bildpunkte an der LCoS-Anzeige 5 ganz zu verzichten oder die Darstellung von Grauwerten auf nur wenige zu beschränken. Dadurch kann die Anzahl der für die Übertragung der Bildinformationsdaten nötigen Datenleitungen zwischen der Anzeigenansteuerung 13 und der LCoS-Anzeige 5 entsprechend reduziert werden. Dies hat außerdem den Vorteil, dass auch der Leistungsbedarf bzw. Leistungsaufnahme der Anzeigeeinrichtung 4 bzw. der Steuerelektronik der fernoptischen Vorrichtung 1 entsprechend gering gehalten werden kann.

Obwohl bei der vorstehenden Beschreibung der Erfindung ein Zielfernrohr als fernoptische Vorrichtung 1 angenommen worden ist, kann die Erfindung aber auch bei anderen fernoptischen Vorrichtungen, wie Feldstechern, Teleskopen oder auch Entfernungsmessern, ihre Vorteile entfalten.

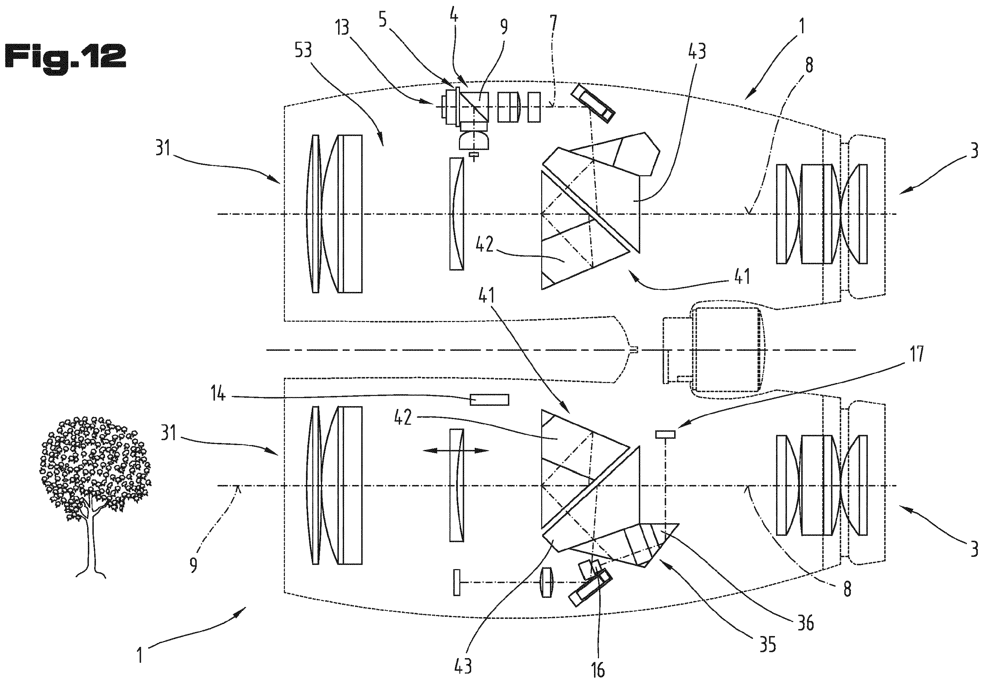

Die Fig. 12 zeigt ein Fernglas bzw. ein Binokular als weiteres Ausführungsbeispiel der fernoptischen Vorrichtung 1. Das Fernglas verfügt über zwei Beobachtungsstrahlengänge 8 die jeweils durch das Objektiv 31 und das Okular 3 hindurch verlaufen. Beide Beobachtungsstrahlengänge 8 weisen auch ein Prismen-Umkehrsystem 41 mit einem Dachkantprisma 42 und einem Umlenkprisma 43 auf. Der Laserentfernungsmesser dieses Fernglases ist durch Anordnung des Lasersenders 16 und des Laserempfängers 17 in einem der beiden Strahlengänge 8 ausgebildet. Dazu ist das aus dem Sender-Prismensystem 35 und dem Empfänger-Prismensystem 36 gebildete Prismensystem an dem Umlenkprisma 43 derart angeordnet, dass die ausgehenden Strahlen des Lasersenders 16 in den Beobachtungsstrahlengang 8 eingekoppelt und die reflektierten Laserstrahlen aus dem Beobachtungsstrahlengang 8 wieder ausgekoppelt werden können, um von dem Laserempfänger 17 detektiert zu werden.

Während in dem einen der beiden Tuben des Fernglases der Laserentfernungsmesser angeordnet ist, ist in dem anderen Tubus die Anzeigeneinrichtung 4 mit der LCoS-Anzeige 5 vorgesehen. Das von der LCoS-Anzeige 5 kommende Licht verläuft durch das Beleuchtungs-Prisma 9 und nach Einkopplung in den Beobachtungsstrahlengang 8 in Richtung auf das Okular 3. Die Einkopplung erfolgt dabei an einer Grenzfläche des Umlenkprismas 43 des Prismen-Umkehrsystem 41. Bei dem zweiten Beobachtungsstrahlengang 8 wird somit dem Bild des entfernten Gegenstandes die an der LCoS-Anzeige 5 dargestellte Anzeige überlagert. So kann beispielsweise das Ergebnis einer mit Hilfe des Lasersenders 16 und des Laserempfängers 17 gemessenen Entfernung - nach Berechnung in der Hauptsteuereinheit 14 (Fig. 8, 9) - mit Hilfe der Anzeigeeinrichtung 4 dem Benutzer in dem Sehfeld des einen Beobachtungsstrahlengangs 8 dargestellt werden.

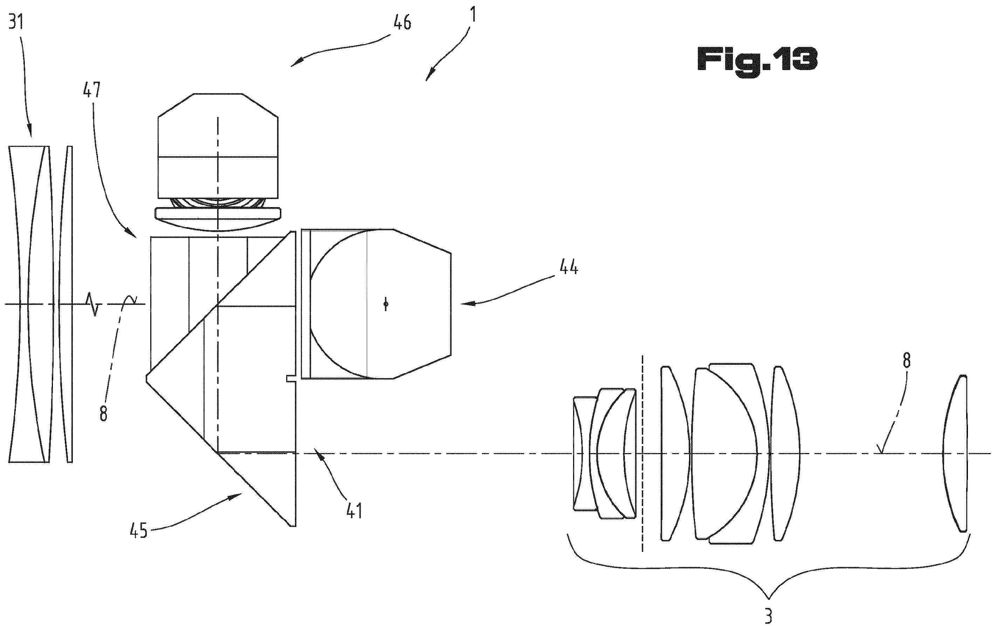

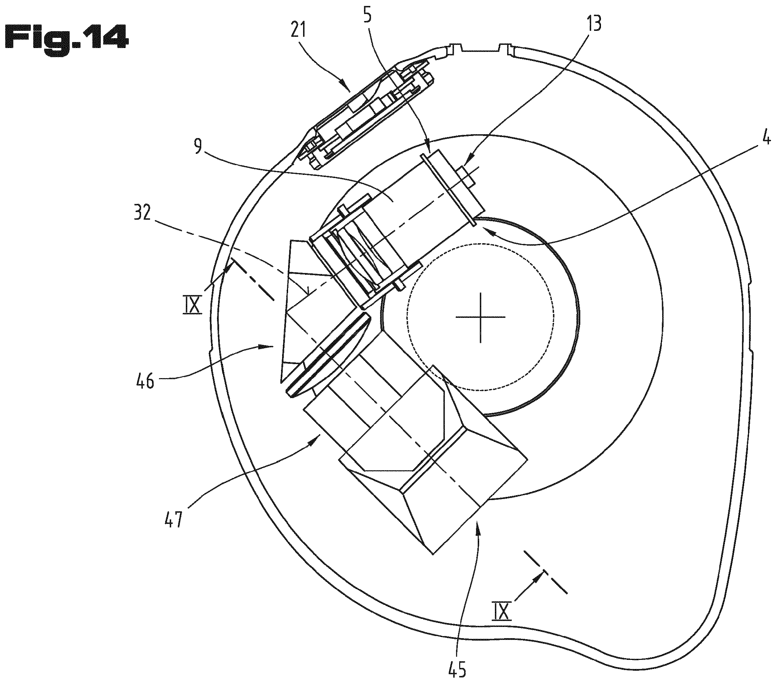

Die Fig. 13 und 14 zeigen als ein drittes Ausführungsbeispiel der fernoptischen Vorrichtung 1 ein Teleskop. Es handelt sich dabei um ein monokulares Beobachtungsteleskop mit nur einem Beobachtungsstrahlengang 8. Zur Aufrichtung und seitenrichtigen Darstellung des von dem Objektiv 31 erzeugten Bildes dient das Prismen-Umkehrsystem 41, das durch ein Porro-Prismensystem erster Art gebildet ist. Das Prismen-Umkehrsystem 41 umfasst demnach ein erstes Umlenkprisma 44 und ein gleichartig ausgebildetes zweites Umlenkprisma 45. Das Teleskop umfasst außerdem die durch eine LCoS-Anzeige 5 gebildete Anzeigeeinrichtung 4. Die Lichtstrahlen des von der Anzeigeeinrichtung 4 erzeugten Bildes gelangen nach Umlenkung durch ein Anzeigenprisma 46 durch ein Koppelprisma 47 und werden mit Hilfe dessen an einer Grenzfläche des zweiten Umlenkprismas 45 in den Beobachtungsstrahlengang 8 des Teleskops eingekoppelt.

Gemäß diesem Ausführungsbeispiel der fernoptischen Vorrichtung 1 ist das Okular 3 des Teleskops als Zoom-Okular, das heißt mit veränderlicher, einstellbarer Brennweite ausgebildet. Dabei ist auch vorgesehen, dass die momentane Einstellung des Okulars 3 durch einen in dem Okulargehäuse angeordneten Detektor gemessen werden kann (nicht dargestellt). Durch die Anzeigevorrichtung 4 kann somit der entsprechende momentane Wert der eingestellten Vergrößerung des Teleskops dem Beobachter im Sehfeld des Okulars gemeinsam mit dem Bild des entfernten Gegenstandes angezeigt werden. Gemäß einer vorteilhaften Weiterbildung des Teleskops ist vorgesehen, dass die Brennweite des Okulars 3 durch einen elektromotorischen Antrieb verändert werden kann. Dadurch ist es möglich, den gewünschten Wert der einzustellenden Vergrößerung des Teleskops durch Eingabe eines entsprechenden Zahlenwerts an dem Bedienelement 21 vorzunehmen. Sowohl die Eingabe des gewünschten Werts der Vergrößerung als auch der Wert der momentan eingestellten Vergrößerung können dabei im Sehfeld des Okulars angezeigt werden, ohne dass der Benutzer die Beobachtung der entfernten Umgebung unterbrechen muss.

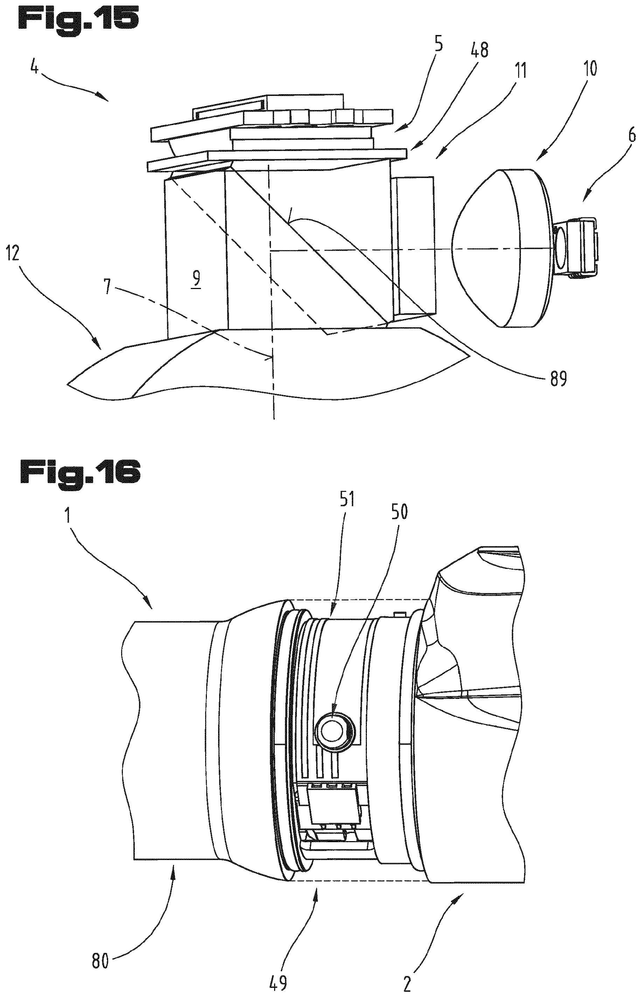

Die Fig. 15 zeigt ein Detail der erfindungsgemäßen Anzeigeeinrichtung 4 gemäß Fig. 7 perspektivisch dargestellt. Aus Gründen der besseren Übersichtlichkeit ist dabei auf die Darstellung von Fassungen bzw. Gehäuseteilen der optischen Elemente verzichtet worden. Die LCoS-Anzeige 5 wird mit polarisiertem Licht beleuchtet, indem von der Lichtquelle 6 abgestrahltes Licht nach Kollimation mit der Beleuchtungs-Linse 10 durch den Polarisator 11 polarisiert und durch das Beleuchtungs-Prisma 9 auf die Flüssigkristallschicht der LCoS-Anzeige 5 hin reflektiert wird. Entsprechend der Ausrichtung der Flüssigkristallmoleküle des Displays der LCoS-Anzeige 5 erfolgt selektiv an einzelnen Pixeln eine Reflexion des polarisierten Lichts. Von der LCoS-Anzeige 5 so reflektiertes Licht gelangt sodann durch das Beleuchtungs-Prisma 9 und das Anzeigen-Prisma 12, entsprechend dem Anzeigen-Strahlengang 7, schließlich in den Beobachtungs-Strahlengang 8 (Fig. 7). Das an der LCoS-Anzeige 5 erzeugte Bild wird auf diese Weise als Überlagerung gemeinsam mit dem Bild eines entfernten Gegenstandes für einen Beobachter durch das Okular 3 hindurch sichtbar (Fig. 1). Neben dem Polarisator 11, der zwischen der Beleuchtungs-Linse 10 und dem Beleuchtungs-Prisma 9 angeordnet ist, weist die Anzeigeneinrichtung 4 auch noch eine Wellenplatte 48 auf. Diese ist zwischen dem Beleuchtungs-Prisma 9 und der LCoS-Anzeige 5 angeordnet. Als Wellenplatte 48 wird vorzugsweise ein λ/4-Plättchen verwendet. Dies hat den Vorteil, dass Inhomogenitäten in der Ausbeute des polarisierten Lichts bei der Beleuchtung, wie sie in der Anzeigeneinrichtung 4 vorgesehen ist, möglichst gering gehalten werden können. Solch eine verminderte Ausbeute des polarisierten Lichts kann durch den vergleichsweise großen Winkelbereich der von der Lichtquelle 6 einfallenden Lichtstrahlenbündel verursacht werden.

Die LCoS-Anzeige 5, die Wellenplatte 48 und das Beleuchtungsprisma 9 sind vorzugsweise durch Verkleben miteinander fest verbunden. Das heißt die Wellenplatte 48 ist einerseits mit der LCoS-Anzeige 5 und andererseits mit dem Beleuchtungsprisma 9 verklebt. Schließlich kann auch noch vorgesehen sein, dass das Beleuchtungs-Prisma 9 mit dem Anzeigen-Prisma 12 verklebt ist. Die Anzeigeeinrichtung 4 bildet auf diese Weise eine kompakte Baugruppe, deren Komponenten während der Herstellung zuverlässig und dauerhaft justiert werden können. Eine Justage der Anzeigeeinrichtung 4 ist schließlich nur mehr relativ zu der optischen Achse des Beobachtungsstrahlenganges 8 beim Zusammenbau der fernoptischen Einrichtung 1 nötig.

Wie im Zusammenhang mit der Steuerung der Bilderzeugung durch die Hauptsteuereinheit 14 (Fig. 8, 9) bereits ausgeführt, erfolgt dort laufend auch eine Überwachung der Vergrößerungseinstellung des Zielfernrohrs 1 durch Auslesen des Zoom-Sensors 20.

Die Fig. 16 zeigt ein Detail einer Seitenansicht des Zielfernrohrs 1 gemäß Fig. 1. Dem Okulargehäuse 2 benachbart ist dabei ein Zoom-Stellring 49 angeordnet. Der Zoom-Stellring 49 ist mechanisch mit den verstellbaren Linsen 36, 37 des Linsenumkehrsystems 33 gekoppelt (Fig. 2). Andererseits ist an einem inneren Umfang des Zoom-Stellrings 49 ein Drücker 50 zum Angriff an einem Folienpotentiometer 51 vorgesehen. Gemäß diesem Ausführungsbeispiel bildet das Folienpotentiometer 51 somit den Zoom-Sensor 20. Der Drücker 50 wird beim Verdrehen des Zoom-Stellrings 49 mit diesem mitverdreht. Das Folienpotentiometer 51 ist, wie der Zoom-Stellring 49, ringartig um den Beobachtungsstrahlengang 8 gekrümmt angeordnet. Eine veränderte Vergrößerungseinstellung kann so über die veränderte Stellung des Zoom-Stellrings 49 bzw. eine veränderte Stellung des Drückers 50 elektrisch detektiert werden.

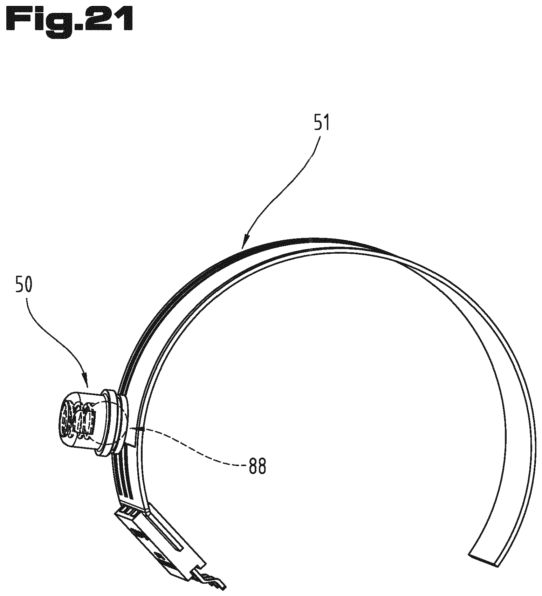

Die Einrichtung zur Erfassung der Vergrößerungseinstellung des Zielfernrohres 1 ist separat nochmals in der Fig. 21 dargestellt. Die Fig. 21 zeigt die Einrichtung zur Erfassung der Vergrößerungseinstellung gemäß Fig. 16, wobei zur besseren Übersichtlichkeit nur das Folienpotentiometer 51 mit seinen elektrischen Anschlüssen und der Drücker 50 dargestellt sind. Das Folienpotentiometer 51 besteht aus zwei in knappem Abstand zueinander, übereinander angeordneten Widerstandsfolien. Je nach der Stellung des Drücker 50 wirkt dieser auf die beiden Widerstandsfolien des Folienpotentiometers 51 ein und stellt auf diese Weise einen Kontakt zwischen den beiden Widerstandsfolien her. Der Drücker 50 umfasst dazu eine federbelastete Kugel 88 die gegen die beiden Widerstandsfolien des Folienpotentiometers 51 drückt. Der Drücker 50 und damit auch die Kugel 88 werden durch ein Verdrehen des Zoom-Stellringes 49 über den Umfang des Folienpotentiometers 51 hinwegbewegt, wodurch der Berührungspunkt zwischen den beiden Widerstandsfolien entsprechend verschoben und der elektrische Gesamtwiderstand verändert wird. Der Drücker 50 als auch dessen Kugel 88 stehen dabei mit dem Folienpotentiometer 51 nicht elektrischer Verbindung. Die Kugel 88 des Drücker 50 kann dabei rollend oder auch gleitend über das Folienpotentiometer 51 hinweggeführt werden.

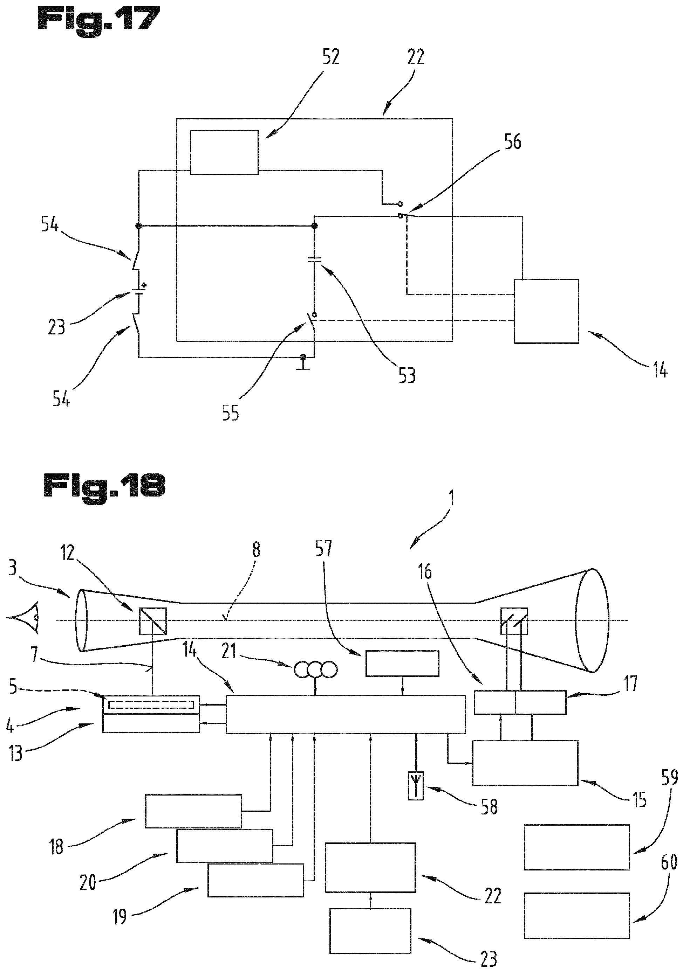

Die Fig. 17 zeigt ein Detail der Steuerung der fernoptischen Vorrichtung 1 gemäß Fig. 8. Gespeist durch die Batterie 23 hält die Energieversorgungseinheit 22 den Betrieb der Hauptsteuereinheit 14 aufrecht. Gemäß diesem Ausführungsbeispiel weist die Energieversorgungseinheit 22 einen Spannungsregler 52 auf. Weiters ist ein Kondensator 53 in der Energieversorgungseinheit 22 vorgesehen, der der Batterie 23 parallel geschalten ist. Dieser Kondensator 53 steht als Zwischenspeicher zur Überbrückung von Unterbrechungen der Versorgungsspannung von der Batterie 23 zur Verfügung. Solche Unterbrechungen können insbesondere bei den hohen Beschleunigungen vorkommen, wie sie bei der Abgabe eines Schusses auftreten. Dabei kann es nämlich zum kurzzeitigen Abheben von Batteriekontakten 54 von den Polen der Batterie 23 kommen. Die Batteriekontakte 54 sind, wie allgemein üblich, federelastisch vorgespannt und liegen so an den beiden Polen der Batterie 23 an, wodurch der elektrische Kontakt aufrechterhalten wird. Bei der Verwendung des Kondensators 53 ist außerdem vorgesehen, dass dieser erst nach Einschalten der Steuerung des Zielfernrohrs 1 durch einen Benutzer aufgeladen wird. Dazu ist in dem die Batterie 23 und den Kondensator 53 enthaltenen Stromkreis ein Schalter 55 vorgesehen. Nach dem Einschalten der Hauptsteuereinheit 14 durch Betätigen des Bedienelementes 21 (Fig. 8) durch einen Benutzer wird - vorzugsweise zeitverzögert - durch eine Schaltlogik der Hauptsteuereinheit 14 der Schalter 55 derart betätigt, dass der Stromkreis geschlossen und der Kondensator 53 aufgeladen wird. Die in dem Kondensator 53 gespeicherte, elektrische Energie steht sodann zur Überbrückung von Unterbrechungen der Versorgung durch die Batterie 23, beispielsweise in Folge eines Rückstoßes bei Abgabe eines Schusses, zur Verfügung.

Der gemäß Fig. 17 in der Energieversorgungseinheit 22 vorgesehene Spannungsregler 52 wird ebenfalls erst nach Einschalten der Steuerung bzw. der Hauptsteuereinheit 14 durch den Benutzer aktiviert. Dazu ist ein weiterer Schalter 56 in der Energieversorgungseinheit 22 vorgesehen, der auch durch die Hauptsteuereinheit 14 betätigbar ist. Demnach ist im ausgeschaltenen Zustand des Zielfernrohrs 1 nur ein Teil einer Steuerlogik der Hauptsteuereinheit 14 aktiv, der dabei direkt von der Batterie 23 mit Strom versorgt wird. Dieser Teil der Steuerlogik (Einschaltlogik) der Hauptsteuereinheit 14 dient dazu, ein Betätigen der Bedienelemente 21 durch einen Benutzer zu Überwachen. Erst durch ein solches Ereignis einer Betätigung eines der Bedienelemente 21 erfolgt durch die Hauptsteuereinheit 14 eine Aktivierung und somit

eine Versorgung der gesamten Steuerung durch den Spannungsregler 52, indem der Schalter 56 entsprechend umgelegt wird. Unabhängig davon wird durch die Einschaltlogik auch der Schalter 55 betätigt, sodass der Kondensator 53 aufgeladen werden kann.

Die Fig. 18 zeigt ein Blockschaltbild der Steuerung der fernoptischen Vorrichtung 1 gemäß einem weiteren Ausführungsbeispiel. Dabei ist die Steuerung des Zielfernrohrs 1 auch mit einem Ballistikrechner 57 ausgestattet. Weiters umfasst die Steuerung eine Antenne 58, die mit der Hauptsteuereinheit 14 verbunden ist. Diese Antenne 58 erlaubt einen leitungsungebundenen Datenaustausch mit einer entsprechenden Fernsteuerung 59. Die Antenne 58 kann beispielsweise durch ein Bluetooth-Modul oder ein WLAN-Modul ausgebildet sein. Alternativ dazu kann die Antenne 58 aber auch in der Art von Komponenten der sogenannten Nahfeldkommunikation (RFID, NFC) ausgebildet sein. Durch die Fernsteuerung 59 kann beispielsweise eine Übertragung von Ballistikdaten auf die Hauptsteuereinheit 14 des Zielfernrohrs 1 durchgeführt werden.

Die Antenne 58 kann schließlich auch zur Kommunikation mit anderen externen Geräten, wie beispielsweise mit einem Smartphone 60, ausgebildet sein. Dadurch ist es auch möglich, die Betriebsweise des Zielfernrohrs 1 bzw. der Hauptsteuereinheit 14 des Zielfernrohrs 1 mit Hilfe des Smartphones 60 zu verändern bzw. die Hauptsteuereinheit 14 zu konfigurieren. Eine weitere Anwendungsmöglichkeit stellt die Durchführung eines Firmware-Updates der Hauptsteuereinheit 14 dar. Gemäß einer alternativen Ausführungsform ist in dem Smartphone 60 selbst ein Ballistikrechner bzw. ein entsprechendes Software-Programms integriert. Entsprechende Rechenergebnisse des Ballistikrechners des Smartphones 60 können dann zu deren weiteren Verwendung mit Hilfe der Antenne 58 an die Hauptsteuereinheit 14 des Zielfernrohrs 1 übertragen werden.

Neben der Erfassung von Umgebungsbedingungen wie des Luftdrucks oder der Temperatur mit entsprechenden Sensoren, kommt der Messung der Laufneigung einer Schusswaffe relativ zur Horizontalen mit Hilfe eines Neigungssensors besonders große Bedeutung zu. Gemäß einem alternativen Ausführungsbeispiel der Steuerung des Zielfernrohrs 1 ist es vorgesehen, auf der Grundlage der Detektion der Neigung mit dem Neigungssensor 18, über die Berechnung eines auf der LCoS-Anzeige 5 darzustellenden Bildes hinaus, auch noch andere Funktionen der fernoptischen Einrichtung 1 zu steuern. So kann ein automatisches Abschalten der Hauptsteuereinheit 14 vorgesehen sein. Dieses kann beispielsweise durch Vorgabe eines bestimmten Zeitintervalls bzw. einer maximalen Einschaltdauer realisiert sein. Ein Schütze kann das automatische Abschalten beispielsweise dadurch vermeiden, dass er noch vor Ablauf der maximalen Einschaltdauer einen Einschaltknopf an den Bedienelementen 21 betätigt und diese Betätigung durch die Hauptsteuereinheit 14 registriert wird. Dadurch würde dieses Zeitintervall der maximalen Einschaltdauer von neuem zu laufen beginnen.

Erfindungsgemäß ist nun vorgesehen, dass die Detektion der Neigung mit dem Neigungssensor 18 als ein Schaltsignal zur Verlängerung der Dauer bis zum automatischen Abschalten des Gesamtsystems verwendet wird. Dazu ist in der Hauptsteuereinheit 14 ein Grenzwert einer maximalen Winkeländerung der durch den Neigungssensor 18 gemessenen Neigung festgelegt. Wird von der Hauptsteuereinheit 14 in einem Beobachtungszeitraum eine Veränderung des Winkelwertes der Neigung registriert, der höher als der angegebene Grenzwert ist, so wird dadurch die automatische Abschaltung weiter hinausgezögert. Ein Schütze kann somit durch absichtliches Verschwenken des Zielfernrohrs 1 veranlassen, dass die Dauer des eingeschaltenen Zustandes des Zielfernrohres 1 verlängert wird. Dazu kann außerdem vorgesehen sein, dass die maximale Dauer des Einschaltzustandes bzw. die verbleibende Einschaltzeit dem Schützen in der LCoS-Anzeige 5 grafisch dargestellt wird. Die verbleibende Zeit kann beispielsweise durch einen kontinuierlich kürzer werdenden Balken in der LCoS-Anzeige 5 dargestellt werden. Beabsichtigt ein Schütze eine längere Dauer der Anzeige in der LCoS-Anzeige 5, so kann er durch absichtsvolle Bewegung bzw. Veränderung der Neigung der Waffe bzw. des Zielfernrohres 1 entsprechend darauf Einfluss nehmen.

Gemäß einer bevorzugten Ausführungsform wird ein Grenzwert einer maximalen Winkeländerung für ein Schwenken des Zielfernrohrs 1 in seitlicher Richtung bzw. für ein seitliches Schwenken des Zielfernrohrs 1 festgelegt. Das heißt, ein seitliches Schwenken um die optische Achse 8 des Zielfernrohrs 1 bzw. um die Laufachse der damit verbunden Waffe dient als Schaltsignal zur Verlängerung der Dauer bis zum automatischen Abschalten. Durch die beschriebene Programmierung der Hauptsteuereinheit 14 wird in vorteilhafter Weise ein sparsamer Energieverbrauch der Batterie 23 erreicht.

Die Fig. 20 zeigt ein Detail der fernoptischen Vorrichtung 1, gemäß den Fig. 1 und 2, mit einem Teil des Mittelrohrs 80 und dem Okulargehäuse 2. In einem okularseitigen Endbereich des Mittelrohrs 80 sind dabei - in strichlierten Linien dargestellt - die elektrischen Komponenten bzw. die Baugruppen der Hauptsteuereinheit 14 gezeigt.

Wie vorstehend bereits mehrfach erwähnt worden ist, können verschiedene Funktionen der fernoptischen Vorrichtung 1 durch einen Benutzer über Betätigungen der Bedienelemente 21 an dem Okulargehäuse 2 beeinflusst bzw. gesteuert werden. Gemäß diesem Ausführungsbeispiel sind als Bedienelemente 21 eine Messtaste 100, eine Minus-Taste 101 und eine Plus-Taste 102 vorgesehen. In Abhängigkeit von dem aktuellen Betriebszustand der Hauptsteuereinheit 14 als auch in Abhängigkeit von der Dauer der Betätigung dieser Tasten 100, 101, 102 kann ein Benutzer verschiedene Funktionen der fernoptischen Vorrichtung 1, wie die Ausführung einer Entfernungsmessung mit dem Entfernungsmesser 15 oder die Anzeige mit der Anzeigeeinrichtung 4, steuern. Zu diesen Funktionen zählen insbesondere das Einschalten der Hauptsteuereinheit 14, das Ausschalten, die Ausführung einer Entfernungsmessung mit dem Entfernungsmesser 15, die Regelung der Helligkeit der Anzeigeeinrichtung 4 und die Bestimmung der Dauer des eingeschaltenen Zustands der Hauptsteuereinheit 14. Weitere Funktionen sind das Einschalten und die Regelung der Helligkeit eines physischen Absehens in einem der Zwischenbildebenen 32, 34 oder das Einschalten einer Bluetooth-Einrichtung zum Aufbau einer Verbindung mit einem externen Gerät.

Einschalten und Ausführen einer Entfernungsmessung: Durch Drücken der Messtaste 100 und gedrückt halten wird die Hauptsteuereinheit 14 eingeschalten bzw. aktiviert und gleichzeitig die Ausführung einer Entfernungsmessung eingeleitet, wobei durch Loslassen des Messtasters 100 der Zeitpunkt der Ausführung der Entfernungsmessung durch den Entfernungsmesser 15 festgelegt wird. Ein Benutzer kann somit während der Dauer des Gedrückhaltens der Messtaste 100 zunächst ein zu messendes Objekt durch Ausrichten der fernoptischen Einrichtung 1 auf dieses Objekt anvisieren und durch loslassen der Messtaste 100 schließlich die Ausführung der Entfernungsmessung einleiten. Die Messung der Entfernung mittels dem Entfernungsmesser 15 erfolgt sodann selbsttätig bzw. programmgesteuert durch die Hauptsteuereinheit 14. Der ermittelte Zahlenwert der gemessenen Entfernung wird unmittelbar daran in der Anzeigeeinrichtung 4 den Benutzer als nummerischer Wert angezeigt. Gleichzeitig erfolgt auch eine Neuberechnung eines in der Anzeigeeinrichtung 4 angezeigten variablen Zielpunkts auf Basis des bestimmten Werts der Entfernung als auch weiterer Messgrößen, wie dem von dem Neigungssensor 18 bestimmten Neigungswinkel.

Ausschalten der Hauptsteuereinheit 14: Werden die Minus-Taste 101 und die Plus-Taste 102 für die Dauer von zumindest 1 Sekunde gleichzeitig niedergedrückt, so wird die fernoptische Vorrichtung 1 bzw. deren Hauptsteuereinrichtung 14 ausgeschalten.

Helligkeitsregelung der Anzeigeeinrichtung 4: Befindet sich die Hauptsteuereinheit 14 als auch die Anzeigeeinrichtung 4 im eingeschalteten Zustand, so kann durch Drücken der Minus-Taste 101 oder der Plus-Taste 102 die Helligkeit der Anzeige 4 vermindert oder erhöht werden.

Veränderung der Einschaltdauer der fernoptischen Vorrichtung 1: Die Hauptsteuereinheit 14 ist derart programmiert, dass ein Wert einer maximalen Einschaltdauer von ca. 70 Sekunden vorgesehen ist. Nach Ablauf dieses Zeitintervalls schaltet sich die fernoptische Vorrichtung 1 bzw. deren Hauptsteuereinheit 14 automatisch ab indem sie in einen Grundzustand bzw. einen Ruhezustand übergeht. Der eingeschaltete Zustand kann durch einen Benutzer durch einfaches Drücken der Minus-Taste 101 oder der Plus-Taste 102 verlängert werden, wobei die vorgegebene maximale Einschaltdauer ab dem Zeitpunkt der Tastenbetätigung von neuem von Null zu laufen beginnt. Alternativ dazu kann der Benutzer aber auch die fernoptische Vorrichtung 1 derart bewegen, dass von dem Neigungssensor 18 ein Mindestwert einer Neigungsänderung detektiert werden kann, woraufhin die Dauer des eingeschalteten Zustands ebenfalls durch einen Neustart der maximalen Einschaltdauer verlängert wird.

Absehenbeleuchtung: Wie vorstehend ausgeführt, ist die fernoptische Vorrichtung 1 zusätzlich zu der Anzeigeeinrichtung 4 auch mit einem physischen Absehen in einer der Zwischenbildebenen 32, 34 ausgestattet. Für dieses physische Absehen ist eine eigene Beleuchtungseinrichtung vorgesehen, die ebenfalls durch Betätigen eines der Bedienelemente 21 eingeschalten und in ihrer Helligkeit geregelt werden kann. Das Einschalten der Beleuchtung des physischen Absehens ist ausgehend von dem abgeschalteten Zustand der fernoptischen Vorrichtung 1 möglich und erfolgt durch ein kurzes und gleichzeitiges Niederdrücken der Minus-Taste 101 und der Plus-Taste 102. Daran anschließend kann durch ein weiteres Betätigen der Minus-Taste 101 oder der Plus-Taste 102 die Helligkeit dieser Beleuchtung dieses physischen Absehens verringert oder erhöht. Diese Beleuchtung des physischen Absehens ist insofern von der Aktivität der Anzeigeeinrichtung 4 unabhängig, als letztere ausgeschalten bleiben kann.

Bluetooth-Verbindung: Vorteilhafterweise ist die Antenne 58 (Fig. 18) durch eine "Bluetooth Low Energy"-Einrichtung (BTLE) ausgebildet. Ausgehend vom Ruhezustand bzw. Ruhebetrieb der Hauptsteuereinheit 14 kann durch Betätigen der Minus-Taste 101 und der Plus-Taste 102 gleichzeitig für die Dauer von 3 Sekunden die Bluetooth-Einrichtung eingeschalten und eine entsprechende Verbindung zu einem externen Gerät hergestellt werden. Programmmäßig ist vorgesehen, dass die Bluetooth Verbindung für eine maximale Dauer von ca. 10 Minuten aufrecht erhalten wird, woraufhin eine automatische Abschaltung erfolgt. Ein früheres Abschalten kann ein Benutzer aber auch durch gleichzeitiges Drücken der Minus-Taste 101 und der Plus-Taste 102 absichtlich auslösen.

Vorteilhafterweise ist die Funktion der Entfernungsmessung mit dem Entfernungsmesser 15 programmtechnisch priorisiert. Das heißt ein Betätigen des Messtasters 100 - egal in welchem Betriebszustand sich die Hauptsteuereinheit 14 gerade befindet - leitet in jedem Fall eine Entfernungsmessung ein. Mit dem Zeitpunkt des Loslassens der Messtaste 100 wird eine Entfernungsmessung automatisch ausgeführt.

Die Ausführungsbeispiele zeigen mögliche Ausführungsvarianten der fernoptischen Vorrichtung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Fig. 1 bis 11; 12; 13, 14; 15; 16, 21; 17; 18;19 und 20 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der fernoptischen Vorrichtung 1 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Fernoptische Vorrichtung | 31 | Objektiv |
| 2 | Okulargehäuse | 32 | Zwischenbild-Ebene |
| 3 | Okular | 33 | Linsen-Umkehrsystem |
| 4 | Anzeigeeinrichtung | 34 | Zwischenbild-Ebene |
| 5 | LCoS-Anzeige | 35 | Sender-Prismensystem |
| 6 | Lichtquelle | 36 | Empfänger-Prismensystem |
| 7 | Anzeigen-Strahlengang | 37 | Linse |
| 8 | Beobachtungsstrahlengang | 38 | Linse |
| 9 | Beleuchtungs-Prisma | 39 | Feldlinse |
| 10 | Beleuchtungs-Linse | 40 | Zerstreuungslinse |
| 11 | Polarisator | 41 | Prismen-Umkehrsystem |
| 12 | Anzeigen-Prisma | 42 | Dachkantprisma |
| 13 | Anzeigen-Ansteuerung | 43 | Umlenkprisma |
| 14 | Hauptsteuereinheit | 44 | Umlenkprisma |
| 15 | Entfernungsmesser | 45 | Umlenkprisma |
| 16 | Lasersender | 46 | Anzeigenprisma |
| 17 | Laserempfänger | 47 | Koppelprisma |
| 18 | Neigungssensor | 48 | Wellenplatte |
| 19 | Temperatursensor | 49 | Zoom-Stellring |
| 20 | Zoomsensor | 50 | Drücker |
| 21 | Bedienelement | 51 | Folienpotentiometer |
| 22 | Energieversorgungseinheit | 52 | Spannungsregler |
| 23 | Batterie | 53 | Kondensator |
| 24 | Taktgenerator | 54 | Batteriekontakt |
| 25 | Bus-System | 55 | Schalter |
| 26 | Spaltenzähler | 56 | Schalter |
| 27 | Zeilenzähler | 57 | Ballistikrechner |
| 28 | Bildschreibsequenz | 58 | Antenne |
| 29 | Pause | 59 | Fernsteuerung |
| 30 | Bildperiode | 60 | Smartphone |
| 61 | Frontales Objektiv-Linsensystem | 102 | Plus-Taste |
| 62 | Rückwärtiges Objektiv-Linsensystem | r₁ | Radius |
| 63 | Objektivgehäuse | r₂ | Radius |
| 64 | Objektivrohr | R₁ | Kugelradius |
| 65 | Fassung | R₂ | Kugelradius |
| 66 | Lagergehäuse | f | Brennweite |
| 67 | Drehpunkt | D | Abstand |
| 68 | Lagerfläche | | |
| 69 | Lagerfläche | | |
| 70 | Justiereinrichtung | | |
| 71 | Gewindespindel | | |
| 72 | Druckbolzen | | |
| 73 | Fassung | | |
| 74 | Grenzfläche | | |
| 75 | Bereich | | |
| 76 | Grenzfläche | | |
| 77 | Umlenkprisma | | |
| 78 | Sender-Linse | | |
| 79 | Durchmesser | | |
| 80 | Mittelrohr | | |
| 81 | Deckglas | | |
| 82 | Abdeckung | | |
| 83 | Verriegelung | | |
| 84 | Abdeckung | | |
| 85 | Grenzfläche | | |
| 86 | Gestänge | | |
| 87 | Parallaxe-Knopf | | |
| 88 | Kugel | | |
| 89 | Grenzfläche | | |
| 100 | Mess-Taste | | |
| 101 | Minus-Taste | | |

## Patentansprüche

1. Fernoptische Vorrichtung (1) mit einem Objektiv (31), mit einem Umkehrsystem (33, 41) und mit einem Okular (3), durch die ein Beobachtungsstrahlengang (8) gebildet ist, und mit einem Absehen zum Anvisieren eines Zieles, wobei diese eine opto-elektronische Anzeigeeinrichtung (4) zur Darstellung von veränderbaren Daten oder einer Zielmarke umfasst, wobei ein Anzeigen-Strahlengang (7) der Anzeigeeinrichtung (4) zumindest teilweise in dem Beobachtungsstrahlengang (8) zur Darstellung des entfernten Gegenstands verläuft, und wobei die Anzeigeeinrichtung (4) ein Anzeigen-Prisma (12) umfasst und ein Bereich des Übergangs des Anzeigen-Strahlengangs (7) in den Beobachtungsstrahlengang (8) in dem Anzeigen-Prisma (12) lokalisiert ist wobei das Anzeigen-Prisma (12) zwischen dem Umkehrsystem (33, 41) und dem Okular (3) angeordnet ist, **dadurch gekennzeichnet, dass** die Anzeigeeinrichtung (4) eine LCoS-Anzeige (5) und ein Beleuchtungs-Prisma (9) umfasst, wobei zwischen dem Beleuchtungs-Prisma (9) und der LCoS-Anzeige (5) eine Wellenplatte (48) angeordnet ist, und wobei die Wellenplatte (48) durch ein λ/4-Plättchen gebildet ist.

2. Vorrichtung nach Anspruch 1, **dadurch gekennzeichnet, dass** in dem Anzeigen-Strahlengang (7) zwischen einer Lichtquelle (6) zur Beleuchtung der LCoS-Anzeige (5) und dem Beleuchtungs-Prisma (9) ein Polarisator (11) angeordnet ist.

3. Vorrichtung nach Anspruch 2, **dadurch gekennzeichnet, dass** die LCoS-Anzeige (5) und die Wellenplatte (48) und die Wellenplatte (48) und das Beleuchtungs-Prisma (9) jeweils durch Kleben miteinander verbunden sind.

4. Vorrichtung nach einem der vorhergehenden Ansprüche, **dadurch gekennzeichnet, dass** das Beleuchtungs-Prisma (9) und das Anzeigen-Prisma (12) durch Kleben miteinander verbunden sind.

5. Vorrichtung nach einem der vorhergehenden Ansprüche, **dadurch gekennzeichnet, dass** die LCoS-Anzeige (5) mit einer Anzeigen-Ansteuerung (13) verbunden ist, wobei die Anzeigen-Ansteuerung (13) ein Field Programmable Gate Array (FPGA) umfasst.

6. Vorrichtung nach einem der vorhergehenden Ansprüche, **dadurch gekennzeichnet, dass** die Anzeigen-Ansteuerung (13) und die LCoS-Anzeige (5) durch ein Bus-System (25) miteinander verbunden sind, wobei das Bus-System (25) ein Serial Peripheral Interface (SPI) umfasst.

7. Vorrichtung nach einem der vorhergehenden Ansprüche, **dadurch gekennzeichnet, dass** sie einen Entfernungsmesser (15) mit einem Lasersender (16) und einem Laserempfänger (17) umfasst.

8. Vorrichtung nach Anspruch 7, **dadurch gekennzeichnet, dass** ein Sendestrahlengang des Lasersenders (16) zumindest teilweise in dem Beobachtungsstrahlengang (8) verläuft.

9. Vorrichtung nach einem der vorhergehenden Ansprüche, **dadurch gekennzeichnet, dass** sie einen Neigungssensor (18) umfasst.

10. Vorrichtung nach einem der vorhergehenden Ansprüche, **dadurch gekennzeichnet, dass** sie eine Hauptsteuereinheit (14) mit einem Ballistikrechner umfasst.

11. Vorrichtung nach einem der vorhergehenden Ansprüche, **dadurch gekennzeichnet, dass** die Hauptsteuereinheit (14) zur Erzeugung von Bildinformationsdaten zur Darstellung eines veränderbaren Absehens an der LCoS-Anzeige (5) ausgebildet ist.

12. Verfahren zur Erzeugung eines überlagerten Bildes in einer fernoptischen Vorrichtung (1) mit zumindest einem Beobachtungsstrahlengang (8) zur Darstellung eines entfernten Gegenstands und mit einer opto-elektronischen Anzeigeeinrichtung (4) zur Darstellung von veränderbaren Daten oder einer Zielmarke, wobei ein Bild der veränderbaren Daten oder der Zielmarke durch einen Anzeigen-Strahlengang (7) der Anzeigeeinrichtung (4) in den Beobachtungsstrahlengang (8) projiziert wird, wobei ein Bereich des Übergangs des Anzeigen-Strahlengangs (7) in den Beobachtungsstrahlengang (8) in einem Anzeigen-Prisma (12) der Anzeigeeinrichtung (4) lokalisiert ist, wobei das Anzeigen-Prisma (12) zwischen dem Umkehrsystem (33, 41) und dem Okular (3) angeordnet wird, **dadurch gekennzeichnet, dass** das Bild der veränderbaren Daten oder der Zielmarke durch eine LCoS-Anzeige (5) erzeugt wird, wobei dazu Licht einer Lichtquelle (6) zur Beleuchtung der LCoS-Anzeige (5) nacheinander durch einen Polarisator (11), durch ein Beleuchtungs-Prisma (9) und durch eine Wellenplatte (48) geführt wird.

13. Verfahren nach Anspruch 12, **dadurch gekennzeichnet, dass** zur Erzeugung eines Bildes von einer Anzeigen-Ansteuerung (13) Bildinformationsdaten an die LCoS-Anzeige (5) übertragen werden.

14. Verfahren nach Anspruch 12 oder 13, **dadurch gekennzeichnet, dass** als Anzeigen-Ansteuerung (13) ein Field Programmable Gate Array (FPGA) verwendet wird.

15. Verfahren nach Anspruch 13 oder 14, **dadurch gekennzeichnet, dass** die Bildinformationsdaten zur Darstellung eines veränderbaren Absehens von einer Hauptsteuereinheit (14) berechnet und an die Anzeigen-Ansteuerung (13) zur Ansteuerung der LCoS-Anzeige (5) übertragen werden.

## Claims

1. A long-range optical device (1) having an objective lens (31), having an erecting system (33, 41) and having an eyepiece (3), through which an observation beam path (8) is formed, and having a reticle for aiming at a target, wherein the long-range optical device (1) comprises an opto-electronic display device (4) for displaying variable data or a target mark, wherein a display beam path (7) of the display device (4) runs at least partly in the observation beam path (8) for displaying the distant object, and wherein the display device (4) comprises a display prism (12) and a region of the transition of the display beam path (7) into the observation beam path (8) is located in the display prism (12), wherein the display prism (12) is arranged between the erecting system (33, 41) and the eyepiece (3), **characterized in that** the display device (4) comprises an LCoS display (5) and an illumination prism (9), wherein a wave plate (48) is arranged between the illumination prism (9) and the LCoS display (5), and wherein the wave plate (48) is formed by a λ/4 plate.

2. The device according to claim 1, **characterized in that** a polarizer (11) is arranged in the display beam path (7) between a light source (6) for illuminating the LCoS display (5) and the illumination prism (9).

3. The device according to claim 2, **characterized in that** the LCoS display (5) and the wave plate (48), and the wave plate (48) and the illumination prism (9) are each connected to one another by adhesive bonding.

4. The device according to one of the preceding claims, **characterized in that** the illumination prism (9) and the display prism (12) are connected to each other by adhesive bonding.

5. The device according to one of the preceding claims, **characterized in that** the LCoS display (5) is connected to a display control (13), wherein the display control (13) comprises a Field Programmable Gate Array (FPGA).

6. The device according to one of the preceding claims, **characterized in that** the display control (13) and the LCoS display (5) are connected to one another by a bus system (25), wherein the bus system (25) comprises a Serial Peripheral Interface (SPI).

7. The device according to one of the preceding claims, **characterized in that** it comprises a rangefinder (15) with a laser transmitter (16) and a laser receiver (17).

8. The device according to claim 7, **characterized in that** a transmission beam path of the laser transmitter (16) runs at least partly in the observation beam path (8).

9. The device according to one of the preceding claims, **characterized in that** it comprises an inclination sensor (18).

10. The device according to one of the preceding claims, **characterized in that** it comprises a main control unit (14) with a ballistics computer.

11. The device according to one of the preceding claims, **characterized in that** the main control unit (14) is designed for generating image information data for representing a variable reticle on the LCoS display (5).

12. A method for producing a superimposed image in a long-range optical device (1) with at least one observation beam path (8) for representing a distant object and with an opto-electronic display device (4) for representing variable data or a target mark, wherein an image of the variable data or the target mark is projected by a display beam path (7) of the display device (4) into the observation beam path (8), wherein a region of the transition of the display beam path (7) into the observation beam path (8) is located in the display prism (12) of the display device (4), wherein the display prism (12) is arranged between the erecting system (33, 41) and the eyepiece (3), **characterized in that** the image of the variable data or the target mark is produced by an LCoS display (5), wherein for this purpose light from a light source (6) for illuminating the LCoS display (5) is guided successively through a polarizer (11), through an illumination prism (9) and through a wave plate (48).

13. The method according to claim 12, **characterized in that** for producing an image, image information data is transmitted by a display control (13) to the LCoS display (5).

14. The method according to claim 12 or 13, **characterized in that** a Field Programmable Gate Array (FPGA) is used as the display control (13).

15. The method according to claim 13 or 14, **characterized in that** the image information data for representing a variable reticle is calculated by a main control unit (14) and is transmitted to the display control (13) for controlling the LCoS display (5).

## Revendications

1. Dispositif optique longue distance (1) avec un objectif (31), avec un système d'inversion (33, 41) et avec un oculaire (3) à travers lequel est formé un trajet de faisceau d'observation (8), et avec un réticule permettant de viser une cible, dans lequel ledit dispositif optique longue distance comprend un dispositif d'affichage optoélectronique (4) permettant de représenter des données modifiables ou un repère de cible, dans lequel un trajet de faisceau d'affichage (7) du dispositif d'affichage (4) s'étend au moins partiellement sur le trajet de faisceau d'observation (8) afin de représenter l'objet éloigné, et dans lequel le dispositif d'affichage (4) comprend un prisme d'affichage (12) et une région de transition du trajet de faisceau d'affichage (7) sur le trajet de faisceau d'observation (8) est localisée dans le prisme d'affichage (12), dans lequel le prisme d'affichage (12) est agencé entre le système d'inversion (33, 41) et l'oculaire (3), **caractérisé en ce que** le dispositif d'affichage (4) comprend un affichage LCoS (5) et un prisme d'éclairage (9), dans lequel une lame à retard (48) est agencée entre le prisme d'éclairage (9) et l'affichage LCoS (5), et dans lequel la lame à retard (48) est formée par une lame λ/4.

2. Dispositif selon la revendication 1, **caractérisé en ce qu'**un polariseur (11) est agencé sur le trajet de faisceau d'affichage (7) entre une source de lumière (6), permettant d'éclairer l'affichage LCoS (5), et le prisme d'éclairage (9).

3. Dispositif selon la revendication 2, **caractérisé en ce que** l'affichage LCoS (5) et la lame à retard (48) et la lame à retard (48) et le prisme d'éclairage (9) sont respectivement reliés les uns aux autres par collage.

4. Dispositif selon l'une quelconque des revendications précédentes, **caractérisé en ce que** le prisme d'éclairage (9) et le prisme d'affichage (12) sont reliés l'un à l'autre par collage.

5. Dispositif selon l'une quelconque des revendications précédentes, **caractérisé en ce que** l'affichage LCoS (5) est connecté à une commande d'affichage (13), dans lequel la commande d'affichage (13) comprend un réseau de portes programmables *in situ* (FPGA).

6. Dispositif selon l'une quelconque des revendications précédentes, **caractérisé en ce que** la commande d'affichage (13) et l'affichage LCoS (5) sont reliés entre eux par un système de bus (25), dans lequel le système de bus (25) comprend une interface périphérique série (SPI).

7. Dispositif selon l'une quelconque des revendications précédentes, **caractérisé en ce qu'**il comprend un télémètre (15) avec un émetteur laser (16) et un récepteur laser (17).

8. Dispositif selon la revendication 7, **caractérisé en ce qu'**un trajet de faisceau d'émission de l'émetteur laser (16) s'étend au moins partiellement sur le trajet de faisceau d'observation (8).

9. Dispositif selon l'une quelconque des revendications précédentes, **caractérisé en ce qu'**il comprend un capteur d'inclinaison (18).

10. Dispositif selon l'une quelconque des revendications précédentes, **caractérisé en ce qu'**il comprend une unité de commande principale (14) avec un calculateur balistique.

11. Dispositif selon l'une quelconque des revendications précédentes, **caractérisé en ce que** l'unité de commande principale (14) est conçue pour générer des données d'informations d'image permettant de représenter un réticule modifiable au niveau de l'affichage LCoS (5).

12. Procédé de génération d'une image superposée dans un dispositif optique longue distance (1) avec au moins un trajet de faisceau d'observation (8) permettant de représenter un objet éloigné et avec un dispositif d'affichage optoélectronique (4) permettant de représenter des données modifiables ou un repère de cible, dans lequel une image des données modifiables ou du repère de cible est projetée sur le trajet de faisceau d'observation (8) à travers le trajet de faisceau d'affichage (7) du dispositif d'affichage (4), dans lequel une région de transition du trajet de faisceau d'affichage (7) sur le trajet de faisceau d'observation (8) est localisée dans un prisme d'affichage (12) du dispositif d'affichage (4), dans lequel le prisme d'affichage (12) est agencé entre le système d'inversion (33, 41) et l'oculaire (3), **caractérisé en ce que** l'image des données modifiables ou du repère de cible est générée grâce à un affichage LCoS (5), dans lequel la lumière d'une source lumineuse (6) permettant d'éclairer l'affichage LCoS (5) est guidée successivement par un polariseur (11), par un prisme d'éclairage (9) et par une lame à retard (48).

13. Procédé selon la revendication 12, **caractérisé en ce que** des données d'informations d'image sont transmises à l'affichage LCoS (5) à partir d'une commande d'affichage (13) afin de générer une image.

14. Procédé selon la revendication 12 ou 13, **caractérisé en ce qu'**un réseau de portes programmables *in situ* (FPGA) est utilisé comme commande d'affichage (13).

15. Procédé selon la revendication 13 ou 14, **caractérisé en ce que** les données d'informations d'image sont calculées par une unité de commande principale (14) afin de représenter un réticule modifiable et sont transmises à la commande d'affichage (13) afin de commander l'affichage LCoS (5).
